# EUROPEAN PATENT APPLICATION

(11) **EP 4 606 870 A1**
(43) Date of publication of application: **27.08.2025**
(21) Application number: 23879677.5
(22) Date of filing: 11.10.2023
(51) Int. Cl.: C09D 11/18

(54) **INK COMPOSITION FOR OIL-BASED BALLPOINT PEN AND OIL-BASED BALLPOINT PEN USING SAME**

(30) Priority: 20.10.2022 JP 2022168118
(71) Applicant: Kabushiki Kaisha Pilot Corporation (also trading as Pilot Corporation), Tokyo 104-8304 (JP)
(72) Inventor: MIYAKE, Takahito, Tokyo 104-8304 (JP); KANBAYASHI, Hironobu, Tokyo 104-8304 (JP); FUJII, Takeshi, Tokyo 104-8304 (JP); MASUDA, Hirotaka, Tokyo 104-8304 (JP)
(74) Representative: Hoffmann Eitle
(86) International application number: PCT/JP2023/036880
(87) International publication number: WO 2024/085034

(57) **Abstract**

A ballpoint pen oil-based ink composition including a colorant, an organic solvent, and a 12-hydroxy fatty acid, wherein an ink viscosity of the ballpoint pen oil-based ink composition is 300 mPa·s or more at 20°C and a shear rate of 200 sec⁻¹.

## Description

### TECHNICAL FIELD

The present invention relates to a ballpoint pen oil-based ink composition and an oil-based ink ballpoint pen using the same.

### BACKGROUND ART

Conventionally, oil-based ink ballpoint pens using ink have been known and used by a wide range of age groups because the oil-based ink ballpoint pens are easy to handle. These oil-based ink ballpoint pens includes a colorant, a solvent, a surfactant, and the like to enable favorable writing on paper (Patent Document 1).

In normal use, it is possible to achieve favorable writing on paper. However, in a case where writing was performed on a print formed with printing ink such as toner, line breakage or blur were observed in the handwriting, and writing was not performed favorably. This is because, as for a ballpoint pen, in a case where a ball slides on a print during the writing, and the ball does not rotate sufficiently, so that line breakage and handwriting blur occur, and there is room for improvement (Patent Document 1).

Moreover, the writing feel of writing instruments such as ballpoint pens and marking pens are likely to be affected by the writing resistance between a writing tip and a writing surface during the writing. In particular, a ballpoint pen has a configuration in which a ballpoint pen tip including a metal tip formed of stainless steel or the like and a transfer ball held in a ball socket of the metal tip and formed of metal such as super steel is mounted in an ink storage cylinder. For this reason, there are problems that an abrasion occurs on the ball socket due to the rotation of the ball during the writing, the line breakage, blur, and the like occur in the handwriting, and the writing feel deteriorates, and there was room for improvement. Moreover, in a case where a low ink viscosity is set in order to improve the writing feel, and it is assumed to use an ink applicator, marking pen, or felt-tip pen, a bleed-through occurs in the handwriting due to the low ink viscosity, and there was room for improvement.

In order to solve such problems, various ink compositions for writing instruments using various lubricants have been proposed to improve the lubricity between the writing tip and the writing surface during the writing and to reduce the writing resistance (Patent Documents 2 to 5).

### CITATION LIST

### Patent Literatures

Patent Document 1: JP H8-41406 A
Patent Document 2: JP H5-331403 A
Patent Document 3: JP 2007-176995 A
Patent Document 4: JP 2013-151594 A
Patent Document 5: JP 2014-88486 A

### SUMMARY OF INVENTION

### PROBLEM TO BE SOLVED BY THE INVENTION

In a case of newly using various lubricants, the writing resistance between a writing tip and a writing surface can be reduced to some extent. However, in the related art, poor writing results occur due to the abrasion of the ball socket caused by the load on the ball socket, and there was room for improvement (Patent Documents 2 to 5).

An object of the present invention is to obtain an ballpoint pen oil-based ink composition and an oil-based ink ballpoint pen using the same, the ballpoint pen oil-based ink composition being capable of achieving favorable writing performance by improving lubricity of a writing tip and reducing abrasion of a ball socket in writing on a print formed with a printing ink such as toner.

### MEANS FOR SOLVING PROBLEM

For solving the above-described problem, the present invention includes the following.
1. A ballpoint pen oil-based ink composition comprising:
   a colorant; an organic solvent; and a hydroxy fatty acid,
   wherein an ink viscosity of the ballpoint pen oil-based ink composition is 300 mPa·s or more at 20°C and a shear rate of 200 sec⁻¹.
2. The ballpoint pen oil-based ink composition according to the item 1, wherein a content of the hydroxy fatty acid is in a range of 0.1% by mass to 10% by mass both inclusive with respect to a total amount of an ink composition.
3. The ballpoint pen oil-based ink composition according to the item 1, wherein the hydroxy fatty acid is 12-hydroxystearic acid or a derivative of 12-hydroxy fatty acid.
4. The ballpoint pen oil-based ink composition according to the item 3, wherein the derivative of 12-hydroxy fatty acid is a 12-hydroxystearic acid ester.
5. The ballpoint pen oil-based ink composition according to the item 1 or 2, further comprising one or two or more surfactants selected from a phosphate ester-based surfactant, a fatty acid, and a fatty acid ester.
6. The ballpoint pen oil-based ink composition according to the item 5, wherein the phosphate ester-based surfactant includes an alkyl group whose number of carbon atoms is in a range of 8 to 18 both inclusive.
7. The ballpoint pen oil-based ink composition according to the item 6, further comprising an organic amine whose total amine value is 300 mgKOH/g or less.
8. The ballpoint pen oil-based ink composition according to the item 1, further comprising one or two or more resins selected from a polyvinyl butyral resin, a terpene phenolic resin, and a rosin-based resin.
9. The ballpoint pen oil-based ink composition according to the item 1 or 2, wherein the colorant is a pigment.
10. The ballpoint pen oil-based ink composition according to the item 1 or 2, wherein the organic solvent is one or two or more organic solvents selected from an alkylene oxide derivative of glycerin, an alkylene glycol alkyl ether, an amide solvent, and an aromatic alcohol.
11. An oil-based ink ballpoint pen comprising:
   a ballpoint pen tip provided at a top end of an ink storage cylinder and configured to rotatably hold a ball,
   wherein the ink storage cylinder stores the ballpoint pen oil-based ink composition according to the item 1 or 2.
12. The oil-based ink ballpoint pen according to the item 11, wherein a displacement amount of the ball in an extending direction of the ink storage cylinder is in a range of 3 µm to 25 µm both inclusive.

### EFFECT OF THE INVENTION

According to the present invention, it is possible to achieve the favorable writing performance by improving the lubricity of the writing tip (between the ball and the ball socket of the tip main body) and to reduce the abrasion of the ball socket in writing on the print formed with the printing ink such as toner.

### BRIEF DESCRIPTION OF DRAWINGS

FIG. 1 is a cross-sectional view of an example of a ballpoint pen of the present embodiment.
FIG. 2 is an enlarged cross-sectional view of an example of a ballpoint pen tip.

### DESCRIPTION OF EMBODIMENTS

In the present specification, "part", "%", "ratio" and the like indicating the formulation are on a mass basis unless otherwise specified.

An ballpoint pen oil-based ink composition of the present invention includes a colorant, an organic solvent, and a hydroxy fatty acid, in which an ink viscosity of the ballpoint pen oil-based ink composition is 300 mPa·s or more at 20°C and a shear rate of 200 sec⁻¹. The ballpoint pen oil-based ink composition is an ink composition for an oil-based ink ballpoint pen, which is used for an oil-based ink ballpoint pen.

Since the ballpoint pen oil-based ink composition includes the hydroxy fatty acid, the lubricity of a writing tip (between a ball and a ball socket of a tip main body) is improved. The improvement on the lubricity of the writing tip minimizes line breakage and handwriting blur in writing on a print formed with a printing ink such as toner, and the favorable writing performance is thus achieved. In addition, the lubricity between the ball and the ball socket of the tip main body is improved, and an abrasion occurring on the ball socket can be thus reduced.

Moreover, since the ink viscosity of the ballpoint pen oil-based ink composition is 300 mPa·s or more at 20°C and a shear rate of 200 sec⁻¹, an appropriate ink viscosity is provided to the ballpoint pen oil-based ink composition, thereby enabling the suppression of abrasion acceleration between the ball and the ball socket of the tip main body. Therefore, it is particularly effective to reduce the abrasion of the ball socket, and moreover, it is possible to achieve the favorable writing performance without bleed-through of the handwriting.

Hereinbelow, the ballpoint pen oil-based ink composition and the oil-based ink ballpoint pen of the present invention will be described.

### (Hydroxy Fatty Acid)

Since the ballpoint pen oil-based ink composition of the present invention includes the hydroxy fatty acid, it is possible to improve the lubricity of the writing tip (between the ball and the ball socket of the tip main body), minimize the line breakage and the handwriting blur in writing on a print formed with a printing ink such as toner, achieve the favorable writing performance, and improve the writing feel. In addition, as for a ballpoint pen using the ballpoint pen oil-based ink composition of the present invention, it is possible to improve the lubricity between the ball and the ball socket, reduce the friction between the ball and the ball socket, and reduce the abrasion of the ball socket.

As the hydroxy fatty acid, it is preferable to use hydroxystearic acid or a derivative of hydroxystearic acid.

Examples of the derivative of hydroxystearic acid include derivatives of hydroxystearic acid such as hydroxystearic acid esters, hydroxystearic acid amide compounds, and metal salts of hydroxystearic acid.

In addition, as the hydroxy fatty acid, it is preferable to use 12-hydroxystearic acid or a derivative of 12-hydroxystearic acid, and still more preferable to use a 12-hydroxystearic acid ester, from the viewpoints of the improvement in slidability, the minimization of the line breakage and the handwriting blur in writing on a print formed with a printing ink such as toner, the reduction of abrasion of the ball socket, the improvement in ink stability over time, and the like.

The content of the hydroxy fatty acid is preferably 0.1% by mass or more with respect to the total amount of the ink composition. This is because in a case where the content is 0.1% by mass or more, the effect of the present invention is likely to be obtained. With further consideration, the content of the hydroxy fatty acid with respect to the total amount of the ink composition is preferably 0.2% by mass or more, and preferably 0.5% by mass or more. In addition, since the ink stability over time remains largely unaffected and the effect of the present invention is likely to be obtained, the content of the hydroxy fatty acid with respect to the total amount of the ink composition is preferably 10% by mass or less. With further consideration, the content of the hydroxy fatty acid with respect to the total amount of the ink composition is preferably 5% by mass or less, and preferably 4% by mass or less.

### (Organic Solvent)

Examples of the organic solvent include organic solvents such as alkylene oxide derivatives of glycerin such as polyoxyalkylene glyceryl ether, polyoxyalkylene alkyl glucoside, and polyoxypropylene alkyl ether, alkylene glycol alkyl ethers such as alkylene glycol monoalkyl ether and alkylene glycol dialkyl ether, amide solvents of β-alkoxypropionamides such as 3-methoxy-N,N-dimethylpropanamide, 3-butoxy-N,N-dimethylpropanamide, and 3-ethoxy-N,N-dimethylpropanamide, glycol solvents such as diethylene glycol, triethylene glycol, polyethylene glycol, propylene glycol, dipropylene glycol, butylene glycol, and ethylene glycol, and alcohol solvents such as benzyl alcohol, methanol, ethanol, 1-propanol, 2-propanol, isopropanol, isobutanol, t-butanol, propargyl alcohol, allyl alcohol, 3-methyl-1-butyn-3-ol, ethylene glycol monomethyl ether acetate, and other higher alcohols.

Among these organic solvents, it is preferable to be selected from alkylene oxide derivatives of glycerin, alkylene glycol alkyl ethers, amide solvents, and aromatic alcohols, considering that the effect of the present invention is likely to be exhibited by compatibility with the hydroxy fatty acid. This is because the lubricity of the writing tip is further improved, the line breakage and the handwriting blur are minimized even on a print formed with a printing ink such as toner, the lubricity between the ball and the ball socket is improved, the friction between the ball and the ball socket is reduced, and the abrasion of the ball seat is likely to be reduced. With further consideration, the alkylene oxide derivatives of glycerin, the alkylene glycol monoalkyl ethers, and the amide solvents such as β-alkoxypropionamides are preferable. Among these organic solvents, the alkylene oxide derivatives of glycerin are preferably used in consideration of favorable compatibility with the hydroxy fatty acid, and stability.

As the alkylene oxide derivatives of glycerin, the polyoxyalkylene glyceryl ether is preferable from the viewpoint of improving the slidability, minimizing the line breakage and the handwriting blur in writing on a print formed with a printing ink such as toner, and reducing the abrasion of the ball socket.

In addition, the polyoxyalkylene glyceryl ether is obtained by addition polymerization of an alkylene oxide with glycerin or polyglycerin, and examples thereof include polyoxyalkylene glyceryl ether, polyoxyalkylene diglyceryl ether, and polyoxyalkylene triglyceryl ether.

Moreover, in a case where pigment is used as the colorant, the ink viscosity generally increases due to aggregation of the pigment over time, and ink followability is likely to deteriorate. However, polar groups in the structure of the alkylene oxide derivatives of glycerin are adsorbed onto a surface of the pigment to stably disperse the pigment in the ink. Since an increase in the ink viscosity due to aggregation of the pigment is suppressed, the ink followability is improved, and the line breakage and the handwriting blur in writing on a print formed by a printing ink such as toner are minimized, and a favorable handwriting can be thus obtained. Therefore, in consideration of pigment dispersion stability and ink followability, it is preferable to use polyoxyalkylene glyceryl ether, and in particular, it is preferable to use polyoxyalkylene diglyceryl ether with further consideration.

In addition, examples of the polyoxyalkylene glyceryl ether include polyoxyethylene glyceryl ether and polyoxypropylene glyceryl ether. Among these, the polyoxypropylene glyceryl ether has excellent lipophilicity due to its propylene group, and can suppress moisture absorption of the ballpoint pen oil-based ink composition, thereby improving the stability over time, so that the effect of the present invention is likely to be obtained. Therefore, it is preferable to use polyoxypropylene glyceryl ether.

As the polyoxyalkylene glyceryl ether, the average value of the number of moles of the alkylene oxide added (the average number of moles of alkylene oxide added) is preferably in a range of 1 to 30 both inclusive. Within this range, it is possible to further improve the slidability, minimize the line breakage and the handwriting blur in writing on a print formed with a printing ink such as toner, reduce the abrasion of the ball socket, improve the pigment dispersion stability, and improve the stability over time. With further consideration, the average number of moles of alkylene oxide added is preferably in a range of 1 to 30 both inclusive. Considering further improvement in the slidability and the stability over time, the average number of moles of alkylene oxide added is preferably in a range of 1 to 20 both inclusive and more preferably in a range of 5 to 20 both inclusive

In particular, in consideration of further improvement in the slidability, minimization of the line breakage and the handwriting blur in writing on a print formed with a printing ink such as toner, reduction of abrasion of the ball socket, and favorable writing feel, the average number of moles of propylene oxide added is preferably in a range of 1 to 30 both inclusive. Moreover, the average number of moles of propylene oxide added is more preferably in a range of 1 to 20 both inclusive, still more preferably in a range of 5 to 20 both inclusive, more preferably in a range of 1 to 12 both inclusive, and particularly preferably in a range of 5 to 12 both inclusive. In addition, considering that the effect of the present invention is likely to be exhibited, the structure of the polyoxyalkylene glyceryl ether is preferably a structure represented by the following Formula (1) or (2).

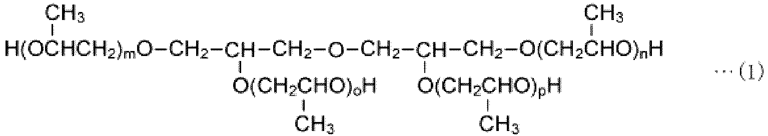

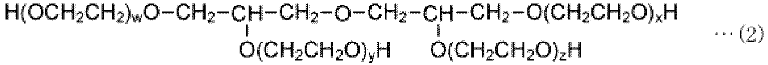

**In** the formula, m, n, o, p, w, x, y, and z each independently represent the number of alkylene oxides added. Here, m + n + o + p represents the average number of moles of propylene oxide added, and w + x + y + z represents the average number of moles of ethylene oxide added.

Among these, the polyoxyalkylene glyceryl ether represented by Formula (1) has a large effect of improving the stability over time, and thereby the effect of the present invention is likely to be obtained, which is preferable.

**In** addition, the weight-average molecular weight of the alkylene oxide derivative of glycerin is preferably 5,000 or less. This is because in a case where the weight-average molecular weight is too large, the stability over time is likely to be affected, the viscosity of the ballpoint pen oil-based ink composition is likely to be increased, and the handwriting according to the ink followability is likely to be affected. With further consideration of the stability over time and the ink followability, the weight-average molecular weight is preferably 3,000 or less, and moreover, the weight-average molecular weight is preferably 1,500 or less and preferably 1,200 or less. In addition, with further consideration of improving the slidability to obtain a favorable handwriting, it is preferably 900 or less. On the other hand, in a case where the weight-average molecular weight is too small, the slidability and the pigment dispersibility are likely to be affected, and the weight-average molecular weight is thus preferably 300 or more, and with further consideration, the weight-average molecular weight is preferably 500 or more.

The weight-average molecular weight is a value obtained in terms of polystyrene using gel permeation chromatography (GPC).

In addition, regarding the number of carbon atoms at an alkylene glycol moiety of the alkylene glycol monoalkyl ether, the number of carbon atoms is preferably in a range of 2 to 10 both inclusive 2 in consideration of the fact that it is likely to exhibit the stable effect with the hydroxy fatty acid. The number of carbon atoms is in a range of 3 to 8 both inclusive, and still more preferably in a range of 5 to 6 both inclusive in consideration of the fact that it is likely to achieve the stability and the above-described effects.

In addition, regarding the number of carbon atoms at an alkyl ether moiety of the alkylene glycol monoalkyl ether, a shorter alkyl ether moiety is preferable in consideration of the fact that it is likely to exhibit the stable effect with the hydroxy fatty acid. Therefore, the number of carbon atoms is preferably in a range of 1 to 6 both inclusive, and in consideration of the fact that it is likely to achieve the stability and the above-described effects, the number of carbon atoms is in a range of 1 to 4 both inclusive, and still more preferably in a range of 1 to 2 both inclusive.

In addition, the solubility parameter (SP value) of the alkylene glycol monoalkyl ether is preferably in a range of 8 to 13 (cal/cm³)^{1/2} both inclusive. This is because the effect of the present invention is likely to be exhibited due to its compatibility with the hydroxy fatty acid, and with further consideration, the solubility parameter (SP value) is preferably in a range of 9 to 12 (cal/cm³)^{1/2} both inclusive, and moreover, in consideration, the solubility parameter (SP value) is still more preferably in a range of 10 to 11 (cal/cm³)^{1/2} both inclusive.

The solubility parameter (SP value) of the solvent referred to in the present invention is a value represented by the square root of molecular cohesive energy, and is described in Polymer HandBook (Second Edition), Chapter IV, Solubility Parameter Values, and that value was used. The unit is (cal/cm³)^{1/2} and refers to a value at 25°C. Note that, in a case where data is not described, calculation can be performed by the method described in R.F. Fedors, Polymer Engineering Science, 14, p. 147 (1967).

In addition, the boiling point of the alkylene glycol monoalkyl ether is preferably 170°C or higher. This is because in a case where the temperature is lower than 170°C, the alkylene glycol monoalkyl ether is likely to evaporate, the ink viscosity is likely to increase, and it is likely to be effective in the minimization of the line breakage and the handwriting blur in writing on a print formed with a printing ink such as toner and the improvement in the writing feel, and with further consideration, the temperature is preferably 220°C or higher. On the other hand, since the dryness of the handwriting is easily affected when the boiling point is higher than 300°C, the boiling point is preferably 300°C or lower, and preferably 280°C or lower with further consideration.

In addition, regarding the amide solvents, in consideration of the fact that it is likely to exhibit the stable effect with the hydroxy fatty acid, 3-methoxy-N,N-dimethylpropanamide and 3-butoxy-N,N-dimethylpropanamide are preferably used, and with further consideration, 3-methoxy-N,N-dimethylpropanamide is preferably used.

Moreover, the content of the organic solvent is preferably in a range of 10% by mass to 90% by mass both inclusive, and preferably in a range of 25% by mass to 80% by mass both inclusive, with respect to the total amount of the ink composition in consideration of the improvement in the solubility, bleed-through, handwriting dryness, blur, and the like.

In the present invention, the ballpoint pen oil-based ink composition preferably includes water. This is because, by using water, the ink viscosity is lowered, and the ink ejection performance is improved while the slidability of the ball is improved; thereby, the minimization of the line breakage and the handwriting blur in writing on a print formed with a printing ink such as toner, the improvement in the writing feel, the reduction of uneven spots, ink blobs, and the like, the improvement in writing performance, and the like are likely to be achieved. In particular, the alkylene glycol alkyl ether or amide solvent is preferably used as the organic solvent because the stabilization with water is likely to be achieved. As water, conventional water such as ion-exchanged water, distilled water, and tap water can be used.

The content of the water is preferably in a range of 0.1% by mass to 20% by mass both inclusive, with respect to the total amount of the ink composition. This is because in a case where the content is within the above-described range, the ink ejection performance is favorable, so that the line breakage and the handwriting blur are minimized even on a print formed with a printing ink such as toner to improve the writing feel, and the uneven spots, ink blobs, and the like are likely to be reduced to improve the writing performance, and the content of the water with respect to the total amount of the ink composition is preferably in a range of 1% by mass to 10% by mass both inclusive with further consideration, and preferably in a range of 2% by mass to 10% by mass both inclusive with further consideration.

### (Colorant)

The colorant used in the ballpoint pen oil-based ink composition of the present invention is not particularly limited, and dye, pigment, and the like can be appropriately selected and used. Dye and pigment may be used in combination.

Examples of the dye used in the oil-based ink composition include oil-soluble dye, acid dye, basic dye, and metallic dye, and include various salt-forming dyes such as a salt-forming dye composed of acid dye and basic dye, a salt-forming dye composed of organic acid and basic dye, and a salt-forming dye composed of acid dye and organic amine. Among these, in consideration of the stability with the hydroxy fatty acid, it is preferable to use the salt-forming dyes.

Examples of the dye include Valifast Black 1802, Valifast Black 1805, Valifast Black 1807, Valifast Violet 1701, Valifast Violet 1704, Valifast Violet 1705, Valifast Blue 1601, Valifast Blue 1605, Valifast Blue 1613, Valifast Blue 1621, Valifast Blue 1631, Valifast Red 1320, Valifast Red 1355, Valifast Red 1360, Valifast Yellow 1101, Valifast Yellow 1151, Nigrosine Base EXBP, Nigrosine Base EX, BASE OF BASIC DYES ROB-B, BASE OF BASIC DYES RO6G-B, BASE OF BASIC DYES VPB-B, BASE OF BASIC DYES VB-B, BASE OF BASIC DYES MVB-3 (all of which are manufactured by Orient Chemical Industries Co. Ltd.), Aizen Spilon Black GMH-special, Aizen Spilon Violet C-RH, Aizen Spilon Blue GNH, Aizen Spiron Blue 2BNH, Aizen Spiron Blue C-RH, Aizen Spiron Red C-GH, Aizen Spiron Red C-BH, Aizen Spiron Yellow C-GNH, Aizen Spiron Yellow C-2GH, S.P.T. Blue 111, S.P.T. Blue GLSH-Special, S.P.T. Red 533, S.P.T. Orange 6, S.B.N. Yellow 510, S.B.N. Yellow 530, and S.R.C-BH (all of which are manufactured by Hodogaya Chemical Co. Ltd.).

Examples of the pigment include inorganic, organic, and processing pigments. Specific examples of the pigment include carbon black, aniline black, ultramarine, chrome yellow, titanium oxide, iron oxide, phthalocyanine-based pigment, azo-based pigment, quinacridone-based pigment, diketopyrrolopyrrole-based pigment, quinophthalone-based pigment, threne-based pigment, triphenylmethane-based pigment, perinone-based pigment, perylene-based pigment, dioxazine-based pigment, metallic pigment, pearl pigment, fluorescent pigment, and phosphorescent pigment.

These dye and pigment may be used alone or in combination of two or more thereof.

The diketopyrrolopyrrole-based pigment is preferable because the handwriting blur or the like is likely to be minimized and a favorable handwriting is likely to be maintained, and it is preferable to use carbon black and the diketopyrrolopyrrole-based pigment in combination.

In addition, it is preferable to use pigment as the colorant. This is because pigment particles cause physical hindrance in the gap between the ball and the inner wall of the tip end in the ballpoint pen, which is likely to prevent ink leakage. Moreover, the pigment is preferable because it is excellent in the durability of handwriting, and particularly excellent in light resistance.

Moreover, as for the ballpoint pen, since the pigment is used, the pigment particles enter the gap between the ball and the tip main body, so that a bearing-like action easily works, and metal contact is minimized, so that the lubricity is improved. In addition, the minimization of the line breakage and the handwriting blur in writing on a print formed with a printing ink such as toner and the reduction of abrasion of the ball socket are achieved, and the effect of improving the writing feel is likely to be obtained. Therefore, it is preferable to use the pigment. In the case where the slidability is improved by using the hydroxy fatty acid as described in the present invention, it is more effective to use the pigment. Moreover, a synergistic effect by the bearing action between a lubricating layer containing a surfactant described later and pigment particles facilitates the preservation of the lubricity, which is preferable.

In addition, primary particles of the pigment are preferably spherical in consideration of the improvement in the lubricity by the bearing action. The spherical shape is not limited to a perfect spherical shape, and may be a substantially spherical shape or a substantially elliptical shape.

The average particle diameter of the pigment is preferably in a range of 1 nm to 500 nm both inclusive. The average particle diameter is more preferably in a range of 30 nm to 350 nm both inclusive, and still more preferably in a range of 50 nm to 300 nm both inclusive. By setting the average particle diameter within the above-described range, the slidability is further improved, so that the line breakage and the handwriting blur are minimized even on a print formed with a printing ink such as toner, and it is thus likely to obtain the effects of reducing the abrasion of the ball socket and improving the writing feel.

Here, the average particle diameter can be determined from a particle diameter (D50) at 50% cumulative volume of the particle size distribution, which is measured based on values calibrated with standard samples or other measurement methods by using a laser diffraction method, specifically, a laser diffraction particle size analyzer (trade name "MicrotracHRA9320 X100", Nikkiso Co. Ltd.).

Note that it is preferable to determine the particle diameter of the above-described pigment in a dispersed state because the pigment exhibits the above-described action and effect in a state where the pigment in the ballpoint pen oil-based ink composition is dispersed.

As the types of pigment, carbon black, quinacridone-based pigment, threne-based pigment, and diketopyrrolopyrrole-based pigment are preferably used. Moreover, it is preferable to use carbon black or diketopyrrolopyrrole-based pigment as the pigment from the viewpoint of minimizing the line breakage and the handwriting blur in writing on a print formed with a printing ink such as toner and reducing the abrasion of the ball socket. In consideration of the minimization of the line breakage and the handwriting blur in writing on a print formed with a printing ink such as toner, the diketopyrrolopyrrole-based pigment is preferable.

Moreover, the content ratio in a case where a carbon black pigment (X) and a diketopyrrolopyrrole-based pigment (Y) are used in combination is preferably 0.1 ≤ X/Y ≤ 10, and preferably 0.3 ≤ X/Y ≤ 8. By setting the content ratio within the above-described range, it is possible to minimize the line breakage and the handwriting blur in writing on a print formed with a printing ink such as toner and stabilize pigment dispersion, thereby achieving a favorable color tone. Considering further minimization of the line breakage and the handwriting blur even in a print, 0.5 ≤ X/Y ≤ 5.5 is preferable, and moreover, 1 ≤ X/Y ≤ 4 is preferable.

Moreover, it is preferable for the content of the pigment with respect to the content of the colorant in the ink composition to be high. Since the content of the pigment is high in the colorant, it is possible to improve the lubricity, minimize the line breakage and the handwriting blur in writing on a print formed with a printing ink such as toner, reduce the abrasion of the ball socket, and improve the writing feel. Specifically, the content of the pigment with respect to the content of the colorant in the ink composition is preferably 50% by mass, more preferably 70% by mass, still more preferably 90% by mass, and particularly preferably 100% by mass.

The content of the colorant is preferably in a range of 5% by mass to 30% by mass both inclusive, with respect to the total amount of the ink composition. This is because, in a case where the content of the colorant is less than 5% by mass, it tends to be less likely to minimize the line breakage and the handwriting blur in writing on a print formed with a printing ink such as toner, reduce the abrasion of the ball socket, and obtain dense handwriting, and in a case where the content of the colorant is more than 30% by mass, it tends to be likely to affect solubility in ink, and taking this tendency into consideration, the content of the colorant is preferably in a range of 7% by mass to 25% by mass both inclusive, and, with even further consideration, the content of the colorant is in a range of 10% by mass to 20% by mass both inclusive.

### (Surfactant)

In the present invention, it is preferable to use a surfactant. This is because, by further improving the lubricity of the writing tip (between the ball and the ball socket of the tip main body), it is likely to achieve the minimization of the line breakage and the handwriting blur in writing on a print formed with a printing ink such as toner, the reduction of abrasion of the ball socket, and the improvement in the writing feel.

Moreover, it is preferable to use a surfactant because it is possible to obtain an effect that is likely to improve writing performance in a case where the writing tip (tip end) is dried in a state where the writing tip (tip end) is left to stand in the atmosphere. In this case, the formed coating tends to be softened in a case where a surfactant is used, and it is possible to improve the writing performance and moreover to improve the lubricity. Examples of the surfactant include a silicone-based surfactant, a fluorine-based surfactant, a phosphate ester-based surfactant, a polyoxyalkylene alkyl ether, a fatty acid, and a fatty acid ester. Among these, in view of the above-described effect, one or two or more selected from a phosphate ester-based surfactant, a fatty acid, and a fatty acid ester are preferable, and with further consideration, one or two selected from a phosphate ester-based surfactant and a fatty acid are more preferable, and a phosphate ester-based surfactant is preferable.

Specific examples of the phosphate ester-based surfactant include phosphate esters having an alkoxyethyl group (CₙH₂ₙ₊₁OCH₂CH₂O) or an alkoxy group (CₘH₂ₘ₊₁O), phosphate monoesters of polyoxyethylene alkyl ethers or polyoxyethylene alkyl aryl ethers, phosphate diesters of polyoxyethylene alkyl ethers or polyoxyethylene alkyl aryl ethers, phosphate triesters of polyoxyethylene alkyl ethers or polyoxyethylene alkyl aryl ethers, alkyl phosphate esters, alkyl ether phosphate esters, and derivatives thereof.

Specific examples of the phosphate ester-based surfactant include a Phoslex series (manufactured by SAKAI CHEMICAL INDUSTRY CO. LTD.), a JP series (manufactured by Johoku Chemical Co. Ltd.), a PLYSURF series (manufactured by DKS Co. Ltd.), a PHOSPHANOL series (manufactured by TOHO Chemical Industry Co. Ltd.), and a NIKKOL series (manufactured by Nikko Chemicals Co. Ltd.).

Among the phosphate ester-based surfactants, in consideration of the improvement in the slidability, the minimization of the line breakage and the handwriting blur in writing on a print, the reduction of abrasion of the ball socket, the improvement in the writing performance, and the improvement in the writing feel, it is preferable to select a phosphate ester-based surfactant from phosphate esters having an alkoxyethyl group (CₙH₂ₙ₊₁O-C₂H₄O) or an alkoxy group (CₘH₂ₘ₊₁O), phosphate monoesters of polyoxyethylene alkyl ethers or polyoxyethylene alkyl aryl ethers, and phosphate diesters of polyoxyethylene alkyl ethers or polyoxyethylene alkyl aryl ethers.

Moreover, among the phosphate ester-based surfactants, it is preferable to use a phosphate ester-based surfactant having an alkoxyethyl group (CₙH₂ₙ₊₁O-C₂H₄O) or an alkoxy group (CₙH₂ₘ₊₁O) in consideration of the improvement in slidability, the minimization of the line breakage and the handwriting blur in writing on a print, the reduction of abrasion of the ball socket, and the improvement in the writing feel, and with further consideration, it is preferable to use a phosphate ester-based surfactant having an alkoxyl group (CₘH₂ₘ₊₁O).

Regarding the phosphate ester-based surfactant, the carbon chain (n, m) of the terminal alkyl group of the alkoxyethyl group (CₙH₂ₙ₊₁O-C₂H₄O) or the alkoxy group (CₘH₂ₘ₊₁O) is preferably in a range of 1 to 20 both inclusive. Moreover, since the slidability is more likely to be maintained in a case where the carbon chain (n, m) of the terminal alkyl group of the alkoxyethyl group (CₙH₂ₙ₊₁O-C₂H₄O) or the alkoxy group (CₘH₂ₘ₊₁O) has an appropriate length, the carbon chain (n, m) of the terminal alkyl group is preferably in a range of 1 to 20 both inclusive, and with further consideration, the carbon chain (n, m) is preferably in a range of 1 to 12 both inclusive, and the carbon chain (n, m) is preferably in a range of 2 to 12 both inclusive, in a range of 3 to 8 both inclusive, and in a range of 3 to 6 both inclusive.

Moreover, among the phosphate ester-based surfactants, it is preferable to use a phosphate ester-based surfactant having an alkyl group, and in particular, the number of carbon atoms included in the alkyl group is preferably in a range of 8 to 18 both inclusive, more preferably in a range of 10 to 18 both inclusive, and still more preferably in a range of 12 to 18 both inclusive, in consideration of the improvement in the slidability, the minimization of the line breakage and the handwriting blur in writing on a print, the reduction of abrasion of the ball socket, the improvement in the writing performance, and the improvement in the writing feel. This is because in a case where the number of carbon atoms of the alkyl group is excessively small, the slidability tends to be insufficient, and in a case where the number of carbon atoms is excessively large, the stability over time tends to be affected.

Since the slidability is more likely to be improved by the interaction using the above-described phosphate ester-based surfactant having an alkoxyethyl group (CₙH₂ₙ₊₁O-C₂H₄O) or an alkoxy group (CₘH₂ₘ₊₁O) in combination with the phosphate ester-based surfactant having an alkyl group, the effect of the present invention is likely to be obtained, which is effective and preferable.

In addition, in a case where the phosphate ester-based surfactant is used, an acid value is preferably 150 (mgKOH/g) or less, more preferably 120 (mgKOH/g) or less, and still more preferably 100 or less. This is because the improvement in the slidability obtained by using the phosphoric acid ester-based surfactant is likely to be exhibited. Moreover, in consideration of the stability and lubricity in the ballpoint pen oil-based ink composition, the acid value is preferably in a range of 30 (mgKOH/g) to 150 (mgKOH/g) both inclusive, preferably in a range of 40 (mgKOH/g) to 120 (mgKOH/g) both inclusive, and more preferably in a range of 40 (mgKOH/g) to 100 (mgKOH/g) both inclusive.

Since the slidability is more likely to be improved by the interaction using the above-described phosphate ester-based surfactant having an alkoxyethyl group (CₙH₂ₙ₊₁O-C₂H₄O) or an alkoxy group (CₘH₂ₘ₊₁O) in combination with the phosphate ester-based surfactant having a specific acid value, the effect of the present invention is likely to be obtained, which is effective and preferable.

Note that the acid value is represented by the number of mg of potassium hydroxide required to neutralize an acidic component included in 1 g of a sample.

The content of the surfactant is more preferably in a range of 0.1% by mass to 5.0% by mass both inclusive, with respect to the total amount of the ballpoint pen oil-based ink composition. This is because in a case where the content is less than 0.1% by mass, it is less likely to obtain the effects such as the improvement in the slidability, the minimization of the line breakage and the handwriting blur in writing on a print, the reduction of abrasion of the ball socket, the improvement in the writing performance, and the improvement in the writing feel, and in a case where the content is more than 5.0% by mass, the ink tends to be unstable over time. Taking these factors into consideration, the content of the surfactant with respect to the total amount of the ballpoint pen oil-based ink composition is preferably in a range of 0.3% by mass to 4.0% by mass both inclusive, and with further consideration, preferably in a range of 0.5% by mass to 3.0% by mass both inclusive.

### (Organic Amine)

In the present invention, in a case of using the surfactant such as the phosphate ester-based surfactant, neutralization is preferably performed because it is likely to obtain the effects of stabilizing dissolution of the surfactant in ink, improving the lubricity of the writing tip, minimizing the line breakage and the handwriting blur in writing on a print, reducing abrasion of the ball socket, improving the writing performance, and improving the writing feel. Examples of the organic amine include amines having ethylene oxide such as oxyethylene alkylamine and polyoxyethylene alkylamine, alkylamines such as laurylamine and stearylamine, aliphatic amines such as dimethylalkylamines such as distearylamine, dimethyllaurylamine, dimethylstearylamine, and dimethyloctylamine, and alkanolamines such as diethanolamine and triethanolamine. Among these, amines having ethylene oxide are preferable in consideration of dissolution stability in ink. These may be used alone or in combination of two or more.

Moreover, the total amine value of the organic amine is preferably 300 (mgKOH/g) or less in consideration of stability with the hydroxy fatty acid, the colorant, the surfactant, and other components. This is because in a case where the total amine value of the organic amine is more than 300 (mgKOH/g), the above components are likely to be affected due to the strong reactivity, and the ink stability over time is thus likely to be affected, and the total amine value is preferably 280 (mgKOH/g) or less with further consideration, and preferably 250 (mgKOH/g) or less with even further consideration. On the other hand, in consideration of the above-described effects, the lower limit value of the total amine value is preferably 30 (mgKOH/g) or more, and the total amine value is preferably 100 (mgKOH/g) or less with further consideration and preferably 150 (mgKOH/g) or less with even further consideration.

Note that the total amine value indicates the total amount of primary, secondary, and tertiary amines, and is represented by the number of mg of potassium hydroxide equivalent to the hydrochloric acid required to neutralize 1 g of a sample.

The HLB value of the organic amine is preferably in a range of 5 to 17 both inclusive. This is because it is likely to be stabilized with the hydroxy fatty acid, the colorant, the surfactant, a resin, and other components, and the effect of the present invention is likely to be obtained, and with further consideration, the HLB value is preferably in a range of 7 to 17 both inclusive, and, with even further consideration, the HLB value is preferably in a range of 9 to 16 both inclusive.

The content of the organic amine with respect to the total amount of the ink composition is preferably in a range of 0.1% by mass to 10% by mass both inclusive in consideration of the stability with the hydroxy fatty acid, the colorant, the surfactant, and other components, and preferably in a range of 0.5% by mass to 5% by mass both inclusive with even further consideration of neutralization of the surfactant.

### (Resin)

In the present invention, it is preferable to include a resin from the viewpoint of improving the slidability, improving the handwriting adhesion to a paper surface, minimizing the line breakage and the handwriting blur in writing on a print, and improving the prevention of the ink leakage at the writing tip. Examples of the resin include a polyvinyl butyral resin, a ketone resin, an amide resin, a terpene phenolic resin, a rosin-based resin, an alkylphenol resin, a styrene-maleic acid resin, an ethylene-maleic acid resin, a styrene-acrylic resin, an acrylic resin, a maleic acid resin, a cellulose resin, a petroleum resin, a coumarone-indene resin, polyethylene oxide, polymethacrylic acid ester, a ketone-formaldehyde resin, and an α- and β-pinene-phenol polycondensation resin. These may be used alone or in combination of two or more.

Among these resins, one or two or more selected from a polyvinyl butyral resin, a ketone resin, a terpene phenolic resin, and a rosin-based resin are preferable in consideration of the improvement in the slidability, the improvement in the handwriting adhesion to a paper surface, the minimization of the line breakage and the handwriting blur in writing on a print formed with a printing ink such as toner, and the prevention of ink leakage at the writing tip. In consideration of a more improvement in the handwriting adhesion to a paper surface, and the minimization of the line breakage and the handwriting blur even on a print formed with a printing ink such as toner, the resin is preferably selected from a polyvinyl butyral resin, a terpene phenolic resin, and a rosin-based resin, and still more preferably selected from a polyvinyl butyral resin and terpene phenolic resin.

Moreover, the terpene phenolic resin is preferable because a strong handwriting film is formed to improve the handwriting adhesion to a paper surface, and moreover, since the terpene phenolic resin has an aromatic ring skeleton, it is likely to achieve the improvement of the slidability by a cushioning effect between the ball and the ball socket, the minimization of the line breakage and the handwriting blur in writing on a print formed with a printing ink such as toner, and the reduction of abrasion of the ball socket by the reduction of the resistance between the ball and the ball socket, which is preferable.

As for the weight-average molecular weight of the terpene phenolic resin, in consideration that it is likely to improve in the handwriting adhesion (writing performance) to a paper surface by forming a stronger handwriting film, further improve the slidability, minimize the line breakage and the handwriting blur even on a print formed with a printing ink such as toner, and moreover make the dissolution stability in ink favorable, thereby obtaining the effect of the present invention, the weight-average molecular weight is preferably in a range of 200 to 1,200 both inclusive, and in consideration of a more improvement in the handwriting adhesion to a paper surface, the minimization of the line breakage and the handwriting blur even on a print formed with a printing ink such as toner, and the dissolution stability in ink, the weight-average molecular weight is preferably in a range of 300 to 1,000 both inclusive, and preferably in a range of 400 to 800 both inclusive. Moreover, this is because in a case where the weight-average molecular weight is too large, the stability over time is likely to be affected, the viscosity of the ballpoint pen oil-based ink composition is likely to be increased, the handwriting is likely to be affected according to the ink followability, and the handwriting is likely to be affected by the line breakage and blur. Note that the weight-average molecular weight of the terpene phenolic resin is measured by a gel permeation chromatography method (GPC method).

The softening point of the terpene phenolic resin is preferably in a range of 70°C to 150°C both inclusive in consideration that, by maintaining viscoelasticity and forming a stronger handwriting film, it is likely to improve the handwriting adhesion (writing performance) to a paper surface, further improve the slidability, and minimize the line breakage and the handwriting blur even on a print formed with a printing ink such as toner, and moreover, it is likely to make dissolution stability in the ink favorable, to obtain the effect of the present invention. The above-described softening point is preferably in a range of 80°C to 130°C both inclusive in consideration of the minimization of the line breakage and the handwriting blur in writing on a print formed by a printing ink such as toner by further maintaining viscoelasticity, and with further consideration, the softening point is preferably in a range of 90°C to 110°C both inclusive. Here, the above-described softening point of the resin is a value measured in accordance with JIS K2207.

Regarding the terpene phenolic resin, the hydroxyl value is generally controlled depending on the number of phenol sites. From the viewpoints of improving the handwriting adhesion (writing performance) to a paper surface, improving the slidability, minimizing the line breakage and the handwriting blur in writing on a print formed with a printing ink such as toner, and improving the dissolution stability in ink by forming a stronger handwriting film, the terpene phenolic resin preferably has a hydroxyl value of 200 mgKOH/g or less. With further consideration, the above-described hydroxyl value is preferably in a range of 30 mgKOH/g to 200 mgKOH/g both inclusive, preferably in a range of 50 mgKOH/g to 200 mgKOH/g both inclusive, preferably in a range of 50 mgKOH/g to 200 mgKOH/g both inclusive, and preferably in a range of 50 mgKOH/g to 100 mgKOH/g both inclusive. Note that, in a case of acetylation of 1 g of the resin, the hydroxyl value is the number of mg of potassium hydroxide required to neutralize acetic acid bonded to a hydroxyl group, and is defined as a value measured based on the potentiometric titration method prescribed in JIS K0070.

In addition, regarding an average polymerization degree of the polyvinyl butyral resin, the average polymerization degree is preferably 100 or more and 2,000 in consideration of the improvement in the slidability, the minimization of the line breakage and the handwriting blur in writing on a print formed with a printing ink such as toner by the handwriting adhesion of ink to a paper surface, and the prevention of the ink leakage at the writing tip. With further consideration, the average polymerization degree is preferably in a range of 100 to 1,500 both inclusive, and more preferably in a range of 200 to 1,000 both inclusive. Here, the average polymerization degree refers to the number of basic units constituting one molecule of the polyvinyl butyral resin, and a value measured based on a method prescribed in JISK6728 (2001 version) can be adopted.

**In** addition, the hydroxyl group content of the polyvinyl butyral resin is preferably 25% by mol or more. This is because the polyvinyl butyral resin having a hydroxyl group content of less than 25% by mol has insufficient solubility in an alkylene glycol alkyl ether solvent, and the effect of the present invention is less likely to be obtained. With further consideration, the polyvinyl butyral resin having a hydroxyl group content of 30% by mol or more is preferable because it is likely to improve the slidability and improve the writing feel. **In** addition, in a case where the polyvinyl butyral resin having a hydroxyl group content of more than 40% by mol is used, the moisture absorption amount is likely to increase, and the stability over time with the ink component is likely to be affected. Therefore, the polyvinyl butyral resin having a hydroxyl group content of 40% by mol or less is preferable. Specifically, the polyvinyl butyral resin having a hydroxyl group content in a range of 30% by mol to 40% by mol both inclusive is preferable, and further preferably, a hydroxyl group content in a range of 30% by mol to 36% by mol both inclusive is preferable.

Note that the hydroxyl group content (% by mol) of the polyvinyl butyral resin indicates a content ratio of a hydroxyl group (% by mol) to the total molar amount of butyral groups (% by mol), acetyl groups (% by mol), and hydroxyl groups (% by mol).

In addition, examples of the rosin-based resin include rosin, rosin ester, and hydrogenated rosin ester, and it is preferable to use rosin ester and hydrogenated rosin ester in consideration of the improvement of the handwriting adhesion to a paper surface and the minimization of the line breakage and the handwriting blur in writing on a print formed with a printing ink such as toner. Moreover, since the ink film is less likely to be rigid, and the writing performance is likely to be favorable at the writing tip, it is preferable to use the rosin-based resin in combination with the terpene phenolic resin.

The softening point of the rosin-based resin is preferably in a range of 50°C to 150°C both inclusive in consideration of the improvement of the handwriting adhesion (writing performance) to a paper surface, the minimization of the line breakage and the handwriting blur in writing on a print formed with a printing ink such as toner, and the achievement of a favorable writing performance. With further consideration, the softening point is preferably in a range of 60°C to 130°C both inclusive, and preferably in a range of 65°C to 115°C both inclusive. Here, the above-described softening point of the resin is a value measured in accordance with JIS K2207.

In a case where the total content of the resin is less than 3% by mass with respect to the total amount of the ink composition, it is less likely to obtain sufficient effects for obtaining the effects of the handwriting adhesion to a paper surface, the slidability, and prevention of the ink leakage. In addition, in a case where the total content of the resin with respect to the total amount of the ink composition is more than 40% by mass, the solubility in ink is likely to be poor, the ink viscosity becomes too high, so that the ink consumption amount is likely to decrease, and the writing feel and the writing performance are likely to be affected. Therefore, the total content of the resin with respect to the total amount of the ballpoint pen oil-based ink composition is preferably in a range of 3% by mass to 40% by mass both inclusive, and with further consideration, preferably in a range of 5% by mass to 30% by mass both inclusive, and preferably in a range of 10% by mass to 25% by mass both inclusive.

In addition, in the present invention, a shear-thinning agent may be used. Examples of the shear-thinning agent include a polyacrylic acid resin, xanthan gum, welan gum, succinoglycan, guar gum, locust bean gum, λ-carrageenan, a cellulose derivative, cellulose oxide, diutan gum, fatty acid amide, and hydrogenated castor oil. It is preferable to include these components because a three-dimensional network structure is formed in ink to effectively achieve the impartment of pseudoplasticity, the improvement of the writing feel, and the minimization of the line breakage and the handwriting blur in writing on a print formed with a printing ink such as toner. In particular, it is preferable to use a polyacrylic acid resin or a polysaccharide because the three-dimensional network structure is likely to be formed, and a more dense crosslinked structure is likely to be formed. With further consideration, a polyacrylic acid resin is preferable, and a crosslinked polyacrylic acid resin is still more preferable.

The polyacrylic acid resin is used as a thickener. The polyacrylic acid resin has affinity with alkylene glycol alkyl ethers and amide solvents, and is swelled and dispersed to obtain a stable thickening action having pseudoplasticity. Moreover, in consideration of the writing feel and the writing performance (minimizing handwriting blur and ink blobs), it is preferable to use the crosslinked polyacrylic acid resin. Moreover, a carboxyvinyl polymer is preferable in consideration of the fact that, by forming a denser crosslinked structure, pseudoplasticity is likely to be imparted, and, as a result, the ink viscosity during the writing is lowered, and the writing feel, the writing performance (minimizing blur and ink blobs), and the like are likely to be improved.

In particular, in a case where an amide solvent such as an alkylene glycol monoalkyl ether or a β-alkoxypropionamide is used as the organic solvent, a more three-dimensional network structure is likely to be formed, which is thus effective and preferable.

In addition, regarding the polyacrylic acid resin, the carboxyl group content in the polyacrylic acid resin is preferably in a range of 40% by mass to 80% by mass both inclusive in consideration of obtaining a stable thickening action with alkylene glycol alkyl ethers. With further consideration, the content is preferably in a range of 50% by mass to 70% by mass both inclusive. In particular, in a case where an alkylene glycol monoalkyl ether is used as the alkylene glycol alkyl ethers, it is preferable to use a polyacrylic acid resin having a carboxyl group content in a range of 55% by mass to 65% by mass both inclusive because it is excellent in swellability and dispersibility, and it is likely to decrease the ink viscosity during the writing by imparting pseudoplasticity, and improve the writing feel. Moreover, the alkylene glycol monomethyl ether is more preferable.

In a case where the content of the shear-thinning agent is less than 0.1% by mass with respect to the total amount of the ink composition, swellability is insufficient, and pseudoplasticity cannot be obtained, so that the improvement in the writing feel is less likely to be obtained. In a case where the content is more than 5.0% by mass, swellability and dispersibility in ink are likely to be poor. Therefore, the content is preferably in a range of 0.1% by mass to 5.0% by mass both inclusive with respect to the total amount of the ink composition. Moreover, the content is preferably in a range of 0.3% by mass to 3.0% by mass both inclusive in consideration of the writing feel and the like, and with further consideration, the content is preferably in a range of 0.6% by mass to 1.8% by mass both inclusive.

In addition, a colorant, a stabilizer, a plasticizer, a chelating agent, and the like may be appropriately used. These may be used alone or in combination of two or more thereof.

In addition, the ink viscosity at 20°C and a shear rate of 200 sec⁻¹ (during the writing) is not particularly limited, but is preferably 5,000 mPa·s or less, and more preferably 4,000 mPa·s or less in consideration of increasing the ink consumption, minimizing the line breakage and the handwriting blur in writing on a print formed with a printing ink such as toner, and improving the writing feel. With further consideration, the ink viscosity is preferably 3,500 mPa·s or less. On the other hand, by having an appropriate ink viscosity, it is possible to suppress the acceleration of abrasion between the ball and the ball socket of the tip main body, and moreover, it is possible to improve the writing performance such as bleed-through on the handwriting, ink blobs, blur, and handwriting dryness, and pigment dispersibility. From this viewpoint, the ink viscosity is preferably 500 mPa·s or more, and with further consideration, preferably 800 mPa·s or more.

In addition, in retractable writing instruments such as a knock-type writing instrument and a twist-type writing instrument, it is necessary to further consider the ink leakage prevention, and the present invention is thus effectively applied.

In a case where the shear-thinning agent is used, the ink viscosity at 20°C and a shear rate of 0.18 sec⁻¹ (at the rest) is preferably 50,000 mPa·s or less in consideration of the ink followability, and with further consideration, preferably 30,000 mPa·s or less. On the other hand, the ink viscosity is preferably 1,000 mPa·s or more in consideration of ink leakage prevention, and with further consideration, preferably 2,000 mPa·s or more, and more preferably 3,000 mPa·s or more.

In addition, in retractable writing instruments such as a knock-type writing instrument and a twist-type writing instrument, it is necessary to further consider the ink leakage prevention, and the present invention is thus effectively applied.

In a case where the shear-thinning agent is used, a viscosity index n refers to n in the viscosity formula represented by S = αDⁿ. Note that S represents a shear stress (dyn/cm² = 0.1 Pa), D represents a shear rate (s⁻¹), and α represents a viscosity coefficient. The viscosity index n can be calculated by measuring the ink viscosity at 20°C using a viscometer of the AR-G2 rheometer (cone plate 40 mm, angle 2°) manufactured by TA Instruments.

For the viscosity index n, it is preferable to set the viscosity index n to be in a range of 0.3 to 0.8 both inclusive, from the viewpoints of minimizing the line breakage and the handwriting blur in writing on a print formed with a printing ink such as toner and improving the writing performance such as the writing feel, ink blobs, and blur. In consideration of a balance of the writing performance such as the writing feel, ink blobs, and blur, the viscosity index n is preferably in a range of 0.35 to 0.7 both inclusive, and preferably in a range of 0.4 to 0.7 both inclusive.

### (Oil-Based Ink Ballpoint Pen)

Next, the oil-based ink ballpoint pen using the ballpoint pen oil-based ink composition of the present invention will be described.

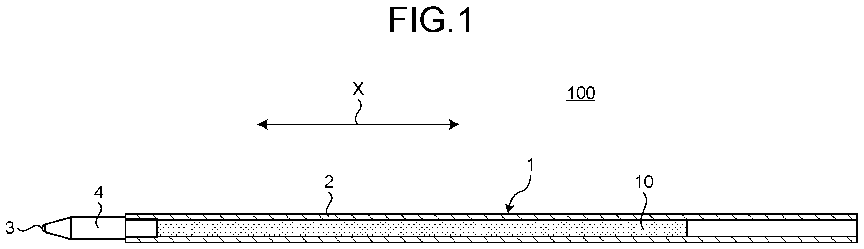

FIG. 1 is a cross-sectional view of an example of a ballpoint pen 100 of the present embodiment. The ballpoint pen 100 is an example of an oil-based ink ballpoint pen.

The ballpoint pen 100 includes a ballpoint pen refill 1. The ballpoint pen refill 1 is a replacement core for the ballpoint pen 100. The ballpoint pen refill 1 includes an ink storage cylinder 2. The ink storage cylinder 2 has a cylinder shape elongated in an extending direction X. The extending direction X is a direction along a straight line passing through the center of the cut surface of the cylindrical ink storage cylinder 2. In other words, the extending direction X is a direction along the central axis of the cylindrical ink storage cylinder 2.

A ballpoint pen oil-based ink composition 10 is stored in the ink storage cylinder 2. The ballpoint pen oil-based ink composition 10 is the above-described ballpoint pen oil-based ink composition of the present invention. As described above, in the present embodiment, the ballpoint pen oil-based ink composition is described by being referred to as the ballpoint pen oil-based ink composition, the ink composition, or the ink.

A ballpoint pen tip 4 is provided at one end of the ink storage cylinder 2 in the extending direction X. The ballpoint pen tip 4 is a member that rotatably holds a ball 3. That is, the ballpoint pen tip 4 holds the ball 3 at a tip end which is the one end of the ink storage cylinder 2 in the extending direction X.

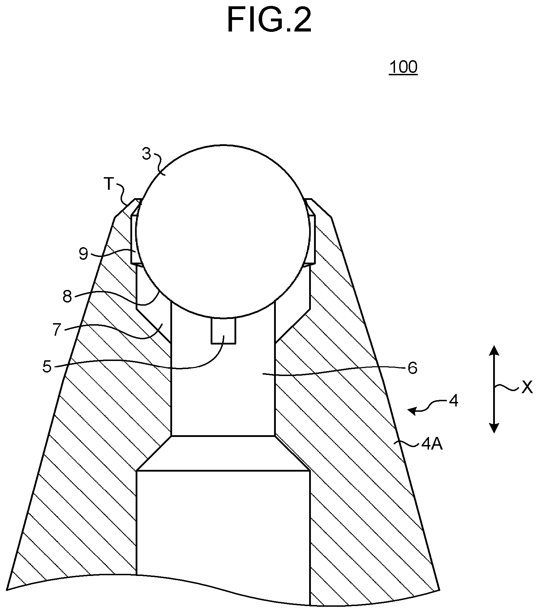

FIG. 2 is an enlarged cross-sectional view of an example of the ballpoint pen tip 4. The ballpoint pen tip 4 includes a tip main body 4A. The tip main body 4A is provided with a coil spring 5, an ink flow hole 6, an ink flow groove 7, a ball socket 8, and a ball holding chamber 9.

The ink flow hole 6 is a hole through which ink flows, the hole penetrating in the extending direction X. The ink is the ballpoint pen oil-based ink composition 10. The ink flow groove 7 is a groove radially extending from the ink flow hole 6. The ball holding chamber 9 is provided at an end of the ink flow hole 6, and has the ball socket 8 in which the ball 3 is placed. The ball socket 8 is provided with the coil spring 5, and presses the ball 3 placed in the ball socket 8 toward the inner wall of a tip end T. Since the ball 3 is placed in the ball socket 8, the ball 3 is rotatably held such that part of the ball 3 protrudes from the tip end T.

**In** a case where writing is performed using the ballpoint pen 100 having the ballpoint pen refill 1, the ink that is the ballpoint pen oil-based ink composition 10 flowing out from the ink storage cylinder 2 is supplied from the ink flow hole 6 to the ball 3 held in the ball holding chamber 9 through the ink flow groove 7. By supplying the ink to the ball 3, writing with the ink is performed on a paper surface or the like.

**In** addition, with the configuration that provides the substantially arc-shaped ball socket 8 provided on the bottom wall of the ball holding chamber 9, the lubricity between the ball 3 and the tip main body 4A is maintained, and it is possible to minimize the handwriting blur, reduce abrasion of the ball socket 8, improve the writing feel, and the like.

The ballpoint pen oil-based ink composition 10 stored in the ink storage cylinder 2 is the above-described ballpoint pen oil-based ink composition of the present invention.

The displacement amount of the ball 3 of the ballpoint pen tip 4 of the ballpoint pen 100 of the present invention in the extending direction X of the ink storage cylinder 2 is preferably in a range of 3 µm to 25 µm both inclusive. The displacement amount of the ball 3 in the extending direction X means a movable distance of the ball 3 in the extending direction X with respect to the tip main body 4A. The displacement amount may be referred to as a clearance.

By setting the displacement amount of the ball 3 in the extending direction X to be within the above-described range, the desired amount of ink consumption is ensured, and the amount of ink consumption increases, so that it is possible to minimize the line breakage and the handwriting blur even on a print formed with a printing ink such as toner, improve the writing feel, and achieve the dense handwriting. With further consideration, the above-described displacement amount is preferably in a range of 3 µm to 22 µm both inclusive, preferably in a range of 5 µm to 20 µm both inclusive, and particularly preferably in a range of 7 µm to 18 µm both inclusive.

In the present invention, the displacement amount of the ball 3 of the ballpoint pen tip 4 in the extending direction X represents the displacement amount of the ball 3 in the extending direction X of the ballpoint pen tip 4 of the ballpoint pen 100 in the initial state before the start of writing.

The diameter of the ball 3 is not limited. As described above, the diameter of the ball 3 is preferably in a range of about 0.1 mm to 2.0 mm both inclusive, and particularly preferably in a range of about 0.3 mm to 1.6 mm both inclusive.

In addition, the arithmetic average roughness (Ra) of the surface of the ball 3 of the ballpoint pen tip 4 used in the present invention is preferably in a range of 0.1 nm to 12 nm both inclusive. This is because, in a case where the arithmetic average roughness (Ra) is less than 0.1 nm, the surface of the ball 3 is less likely to be sufficiently coated with the ink, the dense handwriting is less likely to be obtained during the writing, and the line breakage and blur are likely to occur in handwriting. In a case where the arithmetic average roughness (Ra) is more than 12 nm, the surface of the ball 3 is too rough, and the rotational resistance between the ball 3 and the ball socket 8 is large, so that the writing feel is likely to be poor, and moreover, the writing performance such as blur, line breakage, and line unevenness in handwriting is likely to be affected. In addition, in a case where the arithmetic average roughness (Ra) is in a range of 0.1 nm to 10 nm both inclusive, the writing performance on a non-permeation surface is easily maintained. That is, in a case where the arithmetic average roughness of the surface of the ball 3 is within the above-described range, it is possible to minimize the line breakage and the handwriting blur in writing on a print formed with a printing ink such as toner, improve the writing feel, and achieve the dense handwriting.

The arithmetic average roughness (Ra) of the surface of the ball 3 is more preferably in a range of 0.1 nm to 10 nm both inclusive, still more preferably in a range of 1 nm to 8 nm both inclusive.

The arithmetic average roughness (Ra) of the balls 3 can be measured by (model name: SPI3800N, manufactured by Seiko Epson Corporation). The arithmetic average roughness (Ra) is an averaged value obtained by extracting, from the roughness curve measured by the surface roughness measuring device, only a reference length in the direction of the average line and summing the absolute values of deviations from the average line to the measurement curve in this extracted portion.

In addition, a material used for the ball 3 is not particularly limited, and examples thereof include a cemented carbide ball including tungsten carbide as a main component, a metal ball such as stainless steel, a ceramic ball such as silicon carbide, silicon nitride, alumina, silica, or zirconia, and a ruby ball.

Examples of a material of the ballpoint pen tip 4 include metal materials such as stainless steel, nickel silver, brass (yellow brass), aluminum bronze, and aluminum, and resin materials such as polycarbonate, polyacetal, and ABS. In consideration of abrasion of the ball socket 8, stability over time, and cost, the ballpoint pen tip 4 is preferably provide with the tip main body 4A made of stainless steel.

The ink consumption per 100 m of the ballpoint pen 100 is preferably in a range of 20 mg to 100 mg both inclusive. This is because in a case where the amount of ink consumed per 100 m is within the above-described range, it is possible to achieve the effects that are likely to minimize the line breakage and the handwriting blur in writing on a print formed with a printing ink such as toner, improve the writing feel, obtain the dense handwriting, and the like. With further consideration, the ink consumption amount is preferably in a range of 25 mg to 90 mg both inclusive, and preferably in a range of 40 mg to 80 mg both inclusive.

Note that, as for the ink consumption amount, the average value of the ink consumption amount per 100 m is defined as the ink consumption amount per 100 m obtained by the spiral writing test using five test samples at a writing speed of 4 m/min under the conditions of a writing angle of 70° and a writing load of 200 g on a writing paper according to JIS P3201 at 20°C.

Note that, in a case where the ink is directly stored in the ink storage cylinder 2, the other end of the ink storage cylinder 2 in the extending direction X (the end on the opposite side to the ball 3 installation side) can be filled with an ink backflow inhibitor.

The ink backflow inhibitor composition contains a non-volatile liquid or a low-volatile liquid. Specific examples thereof include petroleum jelly, spindle oil, castor oil, olive oil, refined mineral oil, liquid paraffin, polybutene, α-olefin, α-olefin oligomer or co-oligomer, dimethyl silicone oil, methylphenyl silicone oil, amino-modified silicone oil, polyethermodified silicone oil, and fatty acid-modified silicone oil, and these may be used alone or in combination of two or more.

It is preferable that the non-volatile liquid and/or the low-volatile liquid is thickened to a suitable viscosity by adding a thickener, and examples of the thickener include silica whose surface is hydrophobically treated, fine particle silica whose surface is methylated, aluminum silicate, swellable mica, clay-based thickeners such as bentonite and montmorillonite which are hydrophobically treated, fatty acid metal soaps such as magnesium stearate, calcium stearate, aluminum stearate, and zinc stearate, dextrin-based compounds such as tribenzylidene sorbitol, fatty acid amide, amide-modified polyethylene wax, hydrogenated castor oil, and fatty acid dextrin, and cellulose-based compounds.

Moreover, a liquid ink backflow inhibitor and a solid ink backflow inhibitor can be used in combination.

### [Examples]

Hereinafter, the present invention will be specifically described with reference to Examples. However, the present invention is not limited to the following Examples.

### Example 1

As for a ballpoint pen oil-based ink composition of Example 1, a colorant, an organic solvent, an alkylene oxide derivative of glycerin, a hydroxy fatty acid, a phosphate ester-based surfactant, an organic amine, and a resin were collected at 60°C using a disper stirrer, stirred to be dissolved, followed by cooling at room temperature to obtain a ballpoint pen oil-based ink composition. Specific blending amounts are as follows.

· Pigment dispersion (carbon black, average particle diameter: 150 nm, containing 35% of pigment, and containing 20% of polyvinyl butyral): 40.0% by mass
- Alcohol solvent (benzyl alcohol): 30.5% by mass
- Polyoxyalkylene glyceryl ether (Formula (1), polyoxypropylene diglyceryl ether): 20.0% by mass
- Hydroxy fatty acid (12-hydroxystearic acid ester): 2.0% by mass
   Phosphate ester-based surfactant (alkyl group having 18 carbon atoms and an acid value of 85 (mgKOH/g)): 2.0% by mass
- Phosphate ester-based surfactant having alkoxyethyl group (CₙH₂ₙ₊₁OCH₂CH₂O): 1.0% by mass
- Organic amine (polyoxyethylene alkylamine): 2.0% by mass
- Polyvinyl butyral resin: 2.0% by mass
- Polyvinylpyrrolidone: 0.5% by mass

### (Examples 2 to 34)

Ballpoint pen oil-based ink compositions of Examples 2 to 34 were obtained in the same manner as in Example 1 except that the ink components were changed as illustrated in the tables. The measurement and evaluation results are illustrated in the tables.

### (Comparative Examples 1 to 3)

Ballpoint pen oil-based ink compositions of Comparative Examples 1 to 3 were obtained in the same manner as in Example 1 except that the ink components were changed as illustrated in the table. The measurement and evaluation results are illustrated in the table.

Note that, with respect to the ink viscosity of Examples, the ink viscosity was measured under an environment of 20°C at a shear rate of 200 sec⁻¹ using the RVDVII + Pro viscometer with CP-52 spindle manufactured by Brookfield Corporation, and the measurement results are illustrated in the table.

In addition, ink viscosities of Examples 20 and 24 using the shear-thinning agent were measured under the following conditions, and the viscosity index n was calculated.

As for the ink viscosity of Example 20, similarly, the ink viscosity was 14,000 mPa·s under an environment of 20°C, and a shear rate of 0.18 sec⁻¹, the ink viscosity was 1,100 mPa·s under an environment of 20°C and a shear rate of 200 sec⁻¹, and the viscosity index n was 0.60.

As for the ink viscosity of Example 25, similarly, the ink viscosity was 12,000 mPa·s under an environment of 20°C, and a shear rate of 0.18 sec⁻¹, the ink viscosity was 500 mPa·s under an environment of 20°C and a shear rate of 200 sec⁻¹, and the viscosity index n was 0.55.

### (Test and Evaluation)

A ballpoint pen tip 4 rotatably held by an elastic member pressing a ball 3 (ϕ0.7 mm) against the inner wall of the tip end edge was attached to a tip end of a ink storage cylinder 2 (formed of polypropylene) of a ballpoint pen 100 described with reference to FIGS. 1 and 2. Then, a ballpoint pen refill, in which each of the ballpoint pen oil-based ink compositions (0.3 g) prepared in Examples 1 to 34 and Comparative Examples 1 to 3 was directly stored in the ink storage cylinder 2, was prepared. This ballpoint pen refill was disposed and installed in an oil-based ink ballpoint pen (corresponding to the ballpoint pen 100) manufactured by PILOT Corporation to produce an oil-based ink ballpoint pen.

In each oil-based ink ballpoint pen produced in Examples 1 to 34 and Comparative Examples 1 to 3, the displacement amount of the ball 3 of the ballpoint pen tip 4 in the extending direction X of the ink storage cylinder 2 was 12 µm, and the arithmetic average roughness (Ra) of the ball surface of the ball 3 was 2 nm.

For the oil-based ink ballpoint pens produced for each of Examples 1 to 34 and Comparative Examples 1 to 3, the following tests and evaluations were performed using a writing paper according to JIS P3201 as the writing test paper.

Writing performance test 1 (writing test on a toner printed surface): The handwriting written by hand on the paper surface printed with toner was observed.
⊚···There are no line breakage and handwriting blur.
○···There are some line breakage and handwriting blur.
△···There are line breakage and handwriting blur without practical problem
×···There are a lot of line breakage and handwriting blur

Abrasion resistance test (abrasion test of ball socket): The abrasion of the ball socket with a running tester having a load of 200 gf, a writing angle of 70°, and 4 m/min after the writing test was performed on the writing test paper.
⊚··· The abrasion of the ball socket is less than 5 µm.
○···The abrasion of the ball socket is 5 µm or more and less than 10 µm.
△···The abrasion of the ball socket is 10 µm or more and less than 20 µm, but the writing is possible.
×···The abrasion of the ball socket is severe, and the writing is poor.

Writing performance test 2 (handwriting bleed-through test): The handwriting was observed with a running tester having a load of 200 gf, a writing angle of 70°, and 4 m/min after the 30 m writing test was performed on the writing test paper.
⊚···There is no bleed-through in handwriting.
○···There is a small bleed-through in handwriting, but it is at a level that does not cause any problems in practical use.
△···There is bleed-through in handwriting, which affects its practical use.
×···There is a lot of bleed-through in handwriting.

Writing feel: A sensory test by handwriting was performed on the writing test paper and evaluated.
⊚··· The smoothness is very good.
○···There is smoothness.
△···The smoothness is slightly inferior.
×···There is a heavy sensation.

The evaluation results are illustrated in the following tables.

In addition, in a case where a spiral writing test was conducted with the oil-based ink ballpoint pen, the ink consumption amounts per initial 100 m in Examples 1, 9, 20, and 24 were 44 mg/100 m, 50 mg/100 m, 70 mg/100 m, and 80 mg/100 m, respectively.

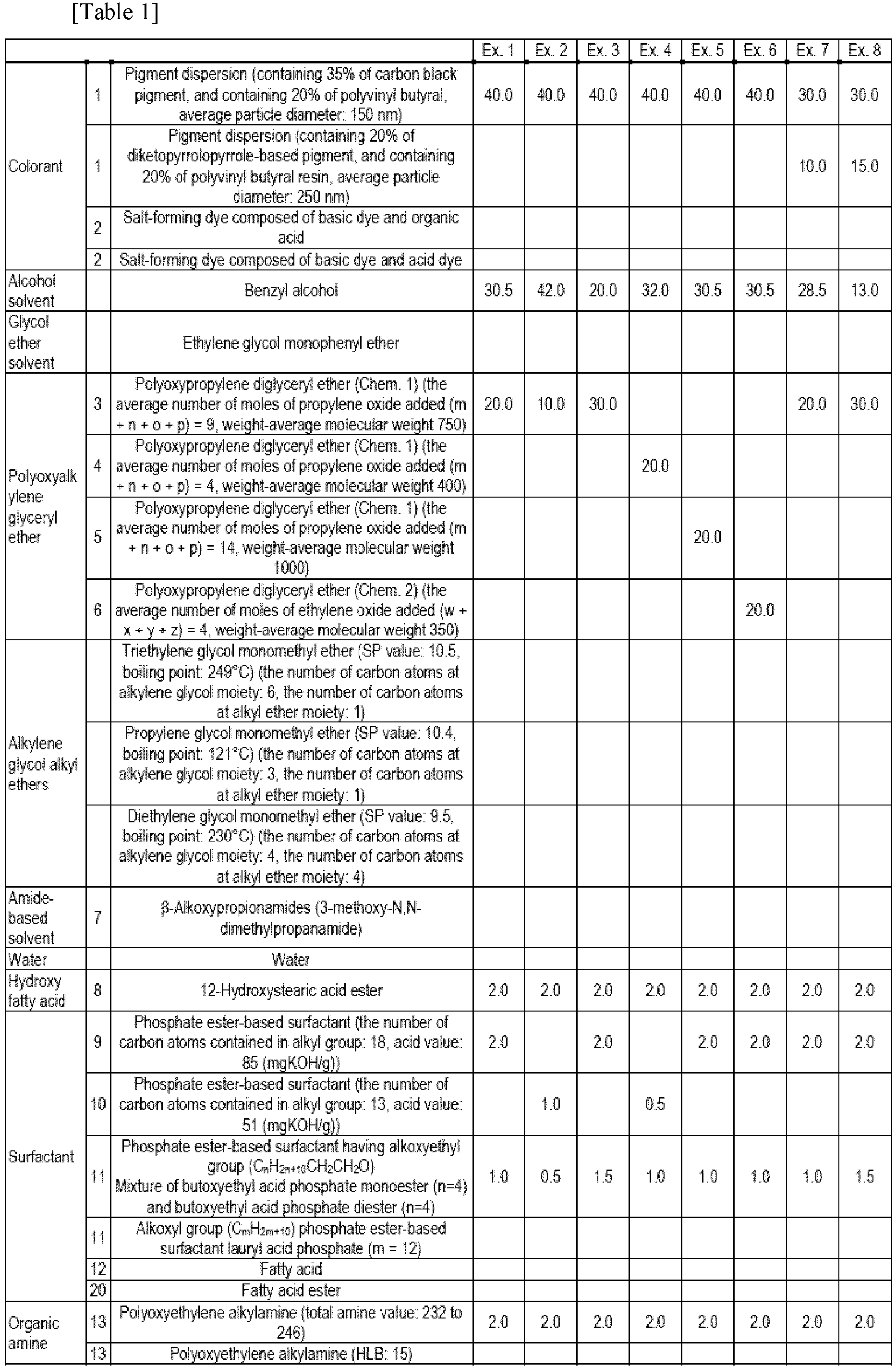

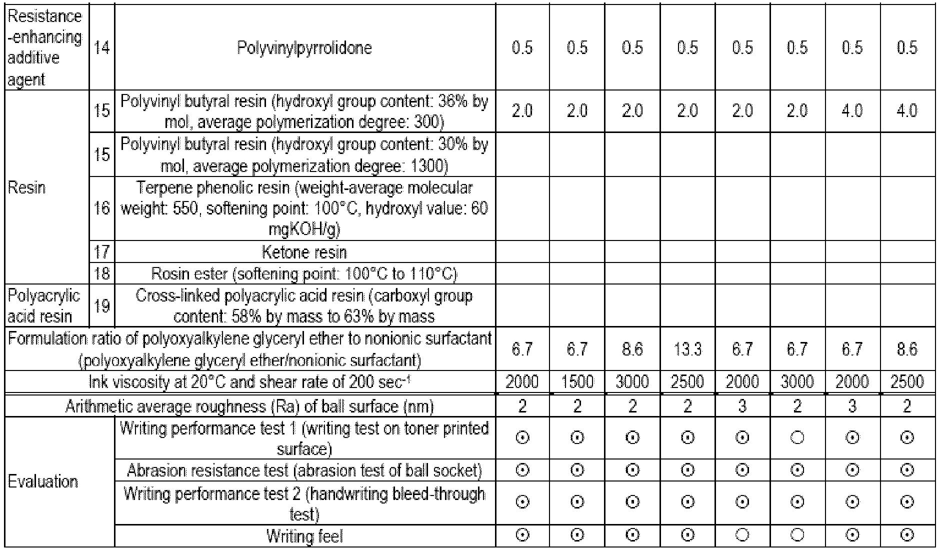

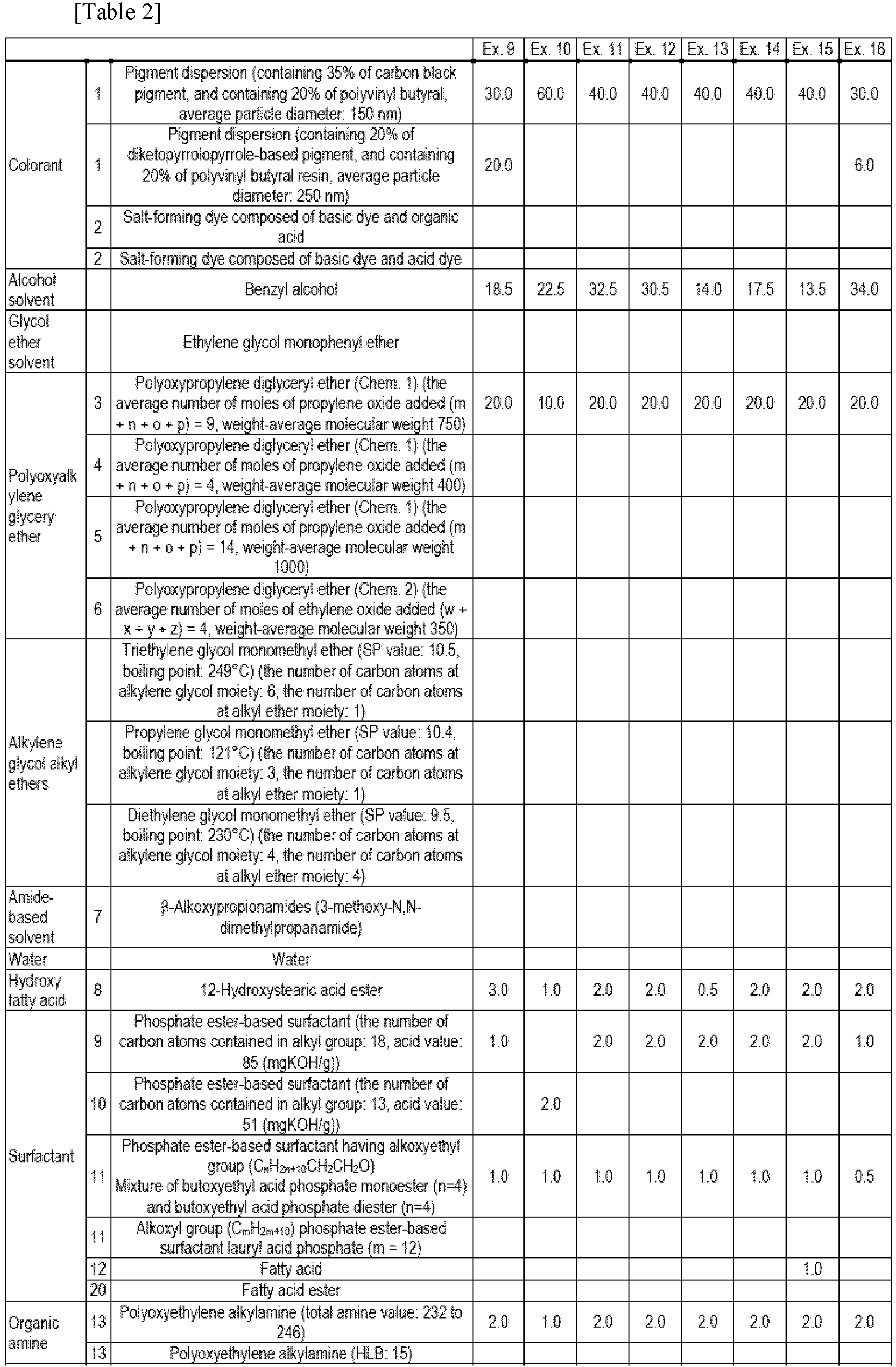

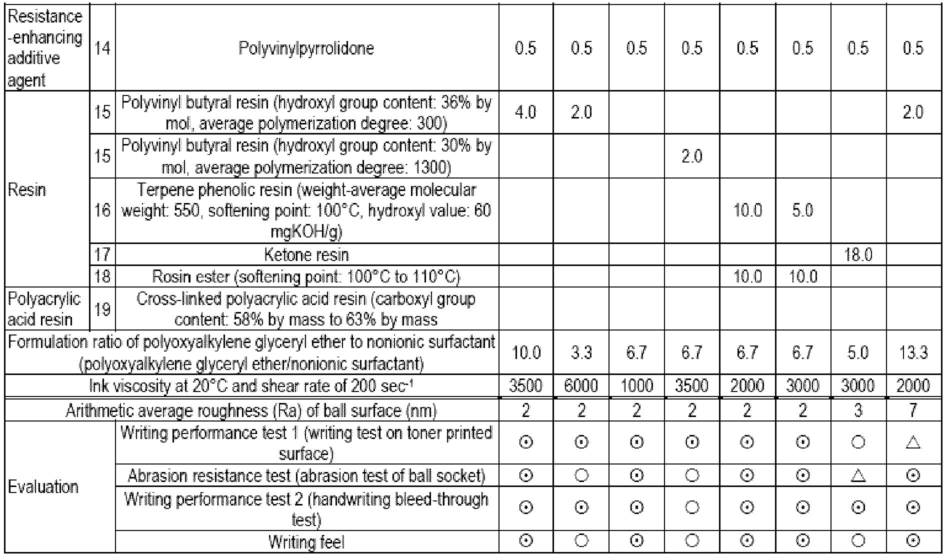

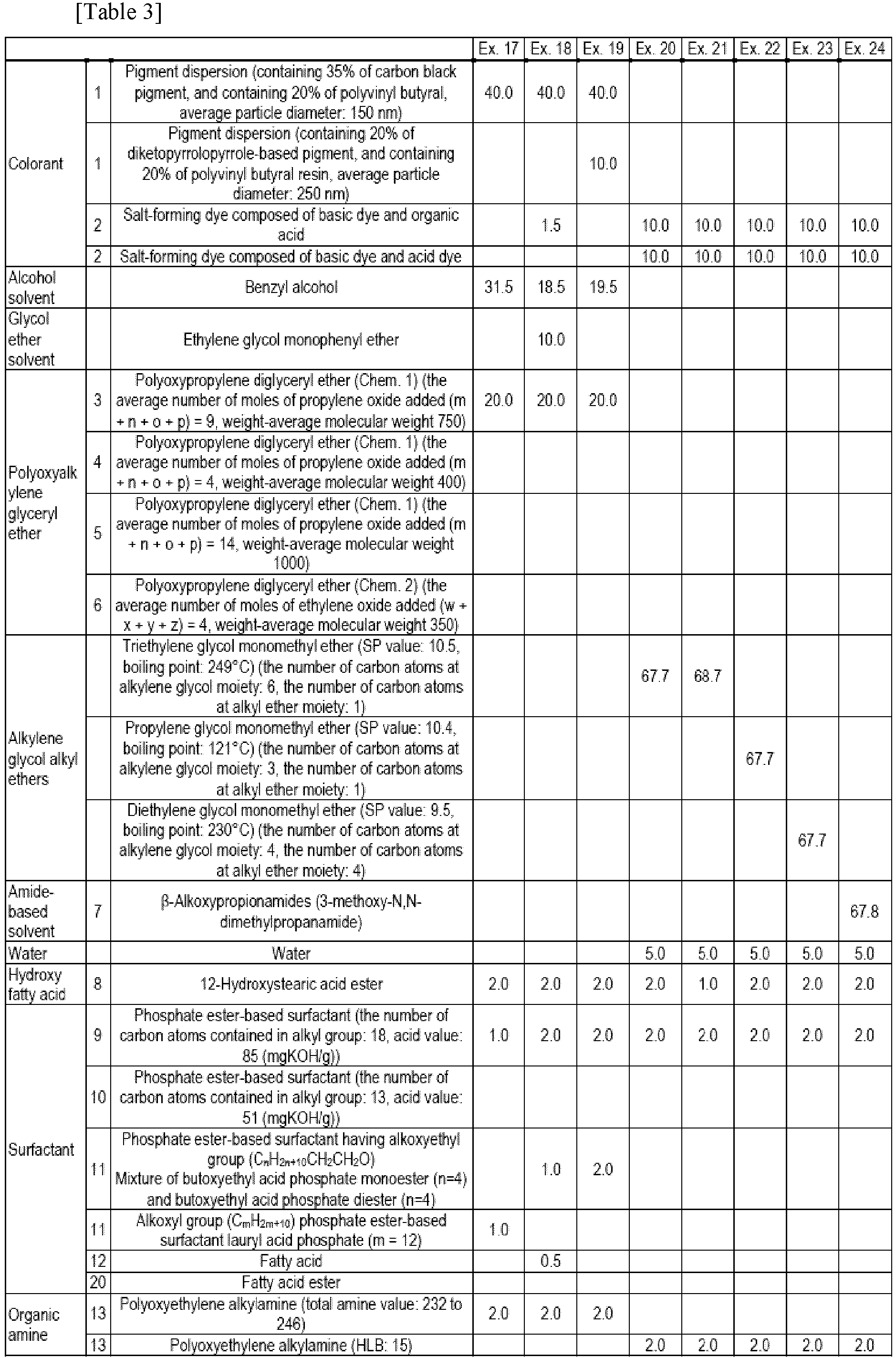

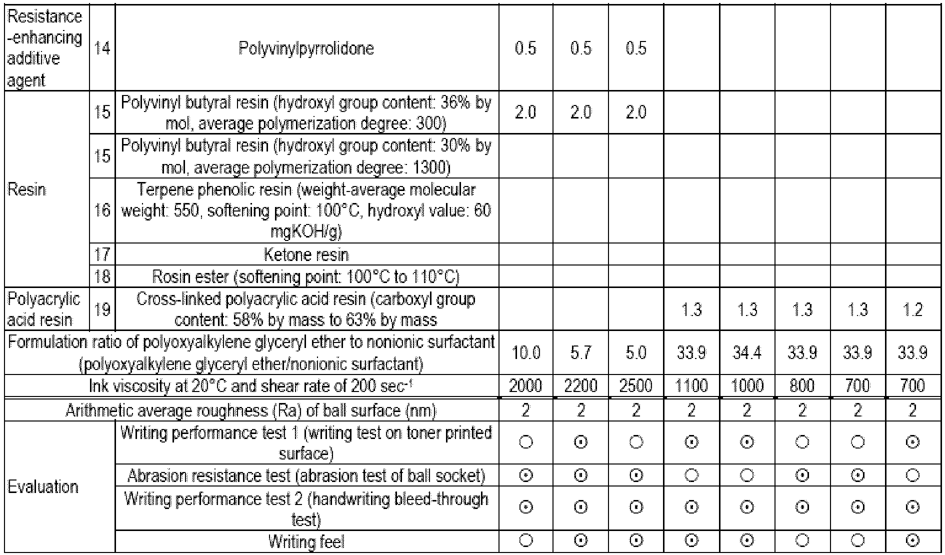

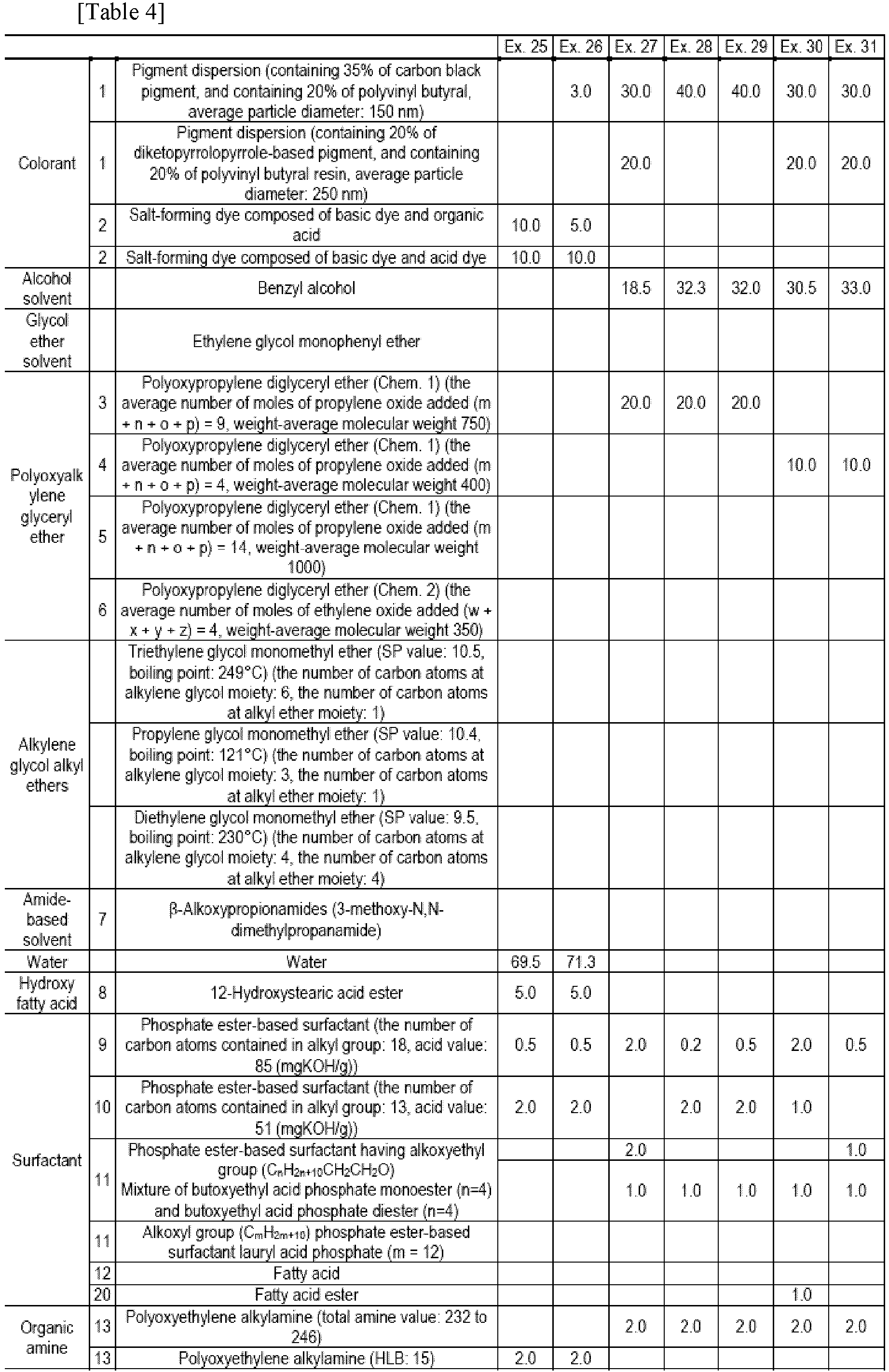

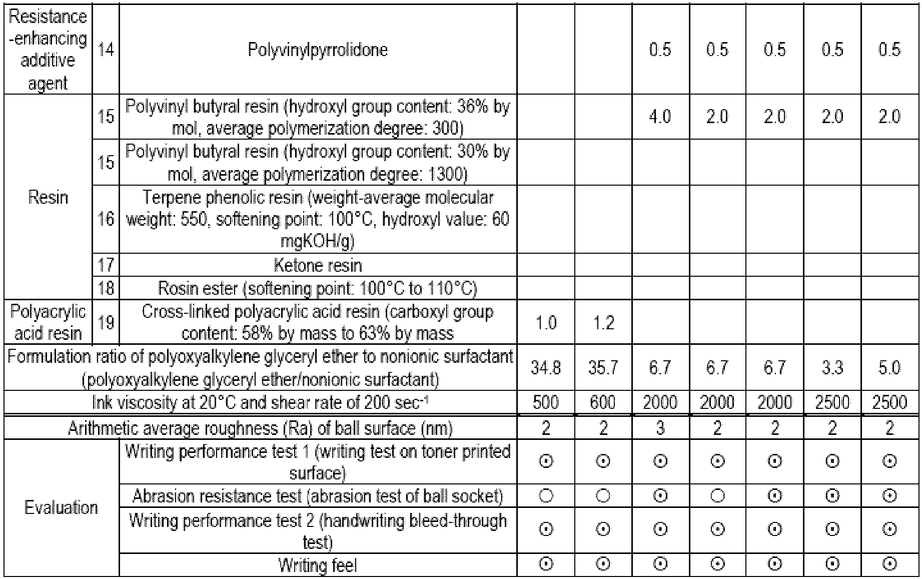

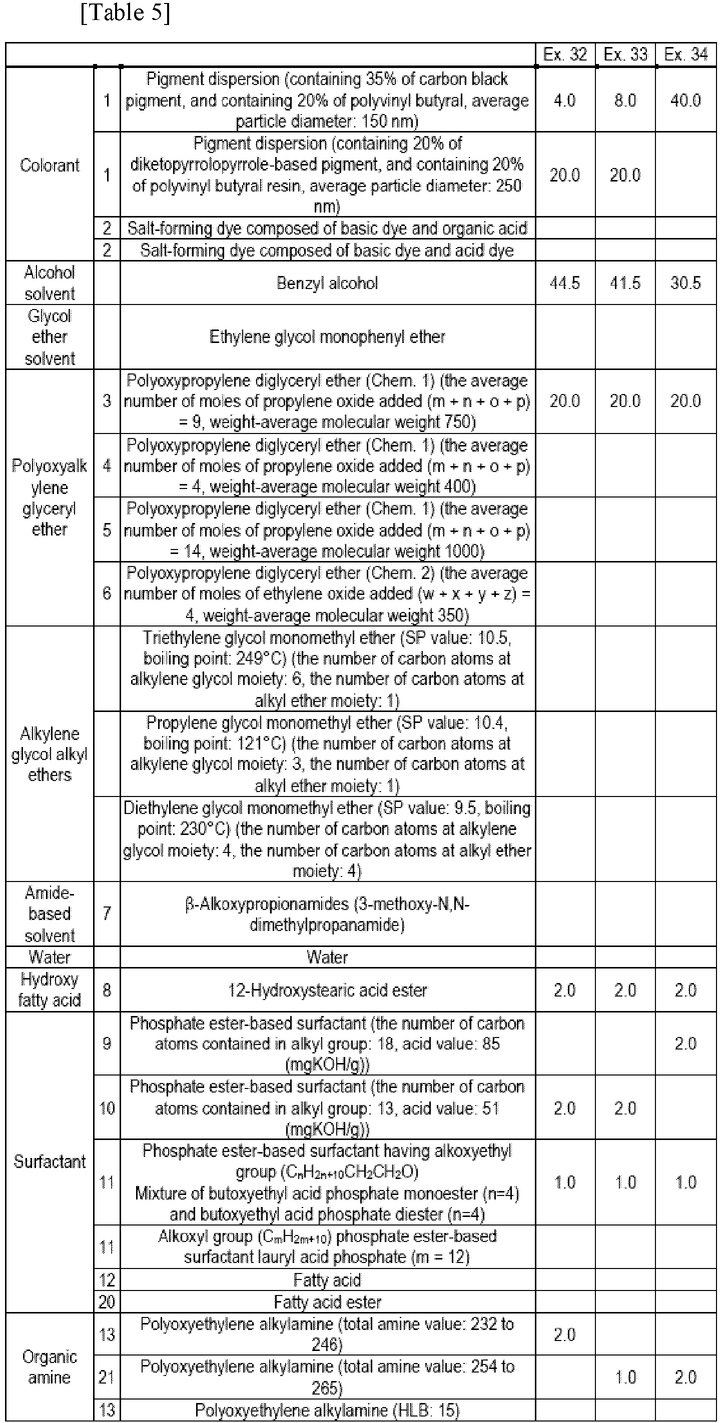

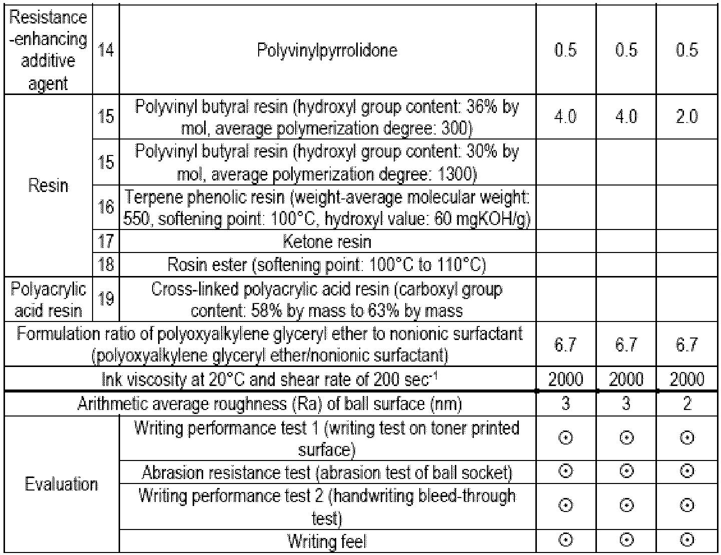

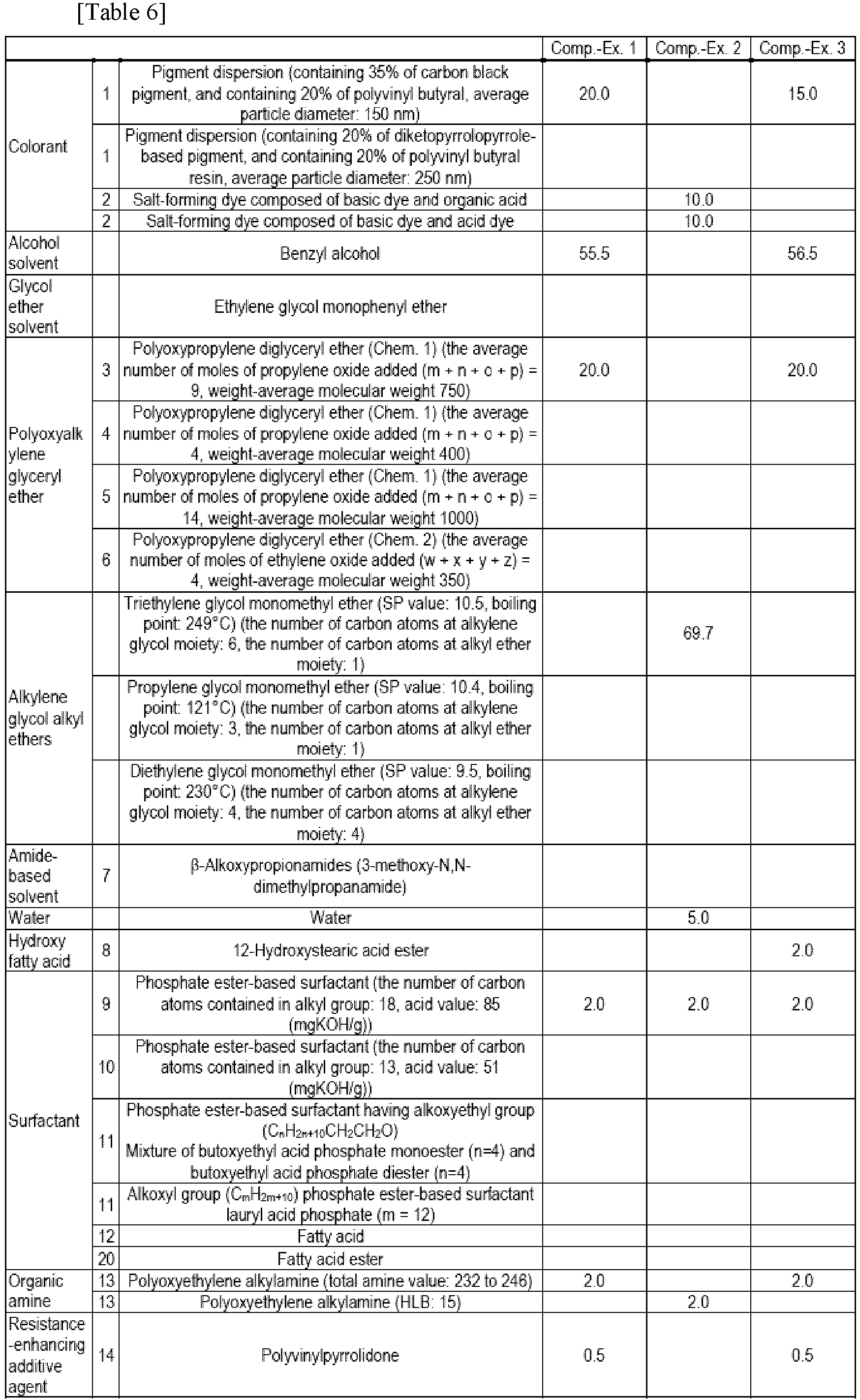

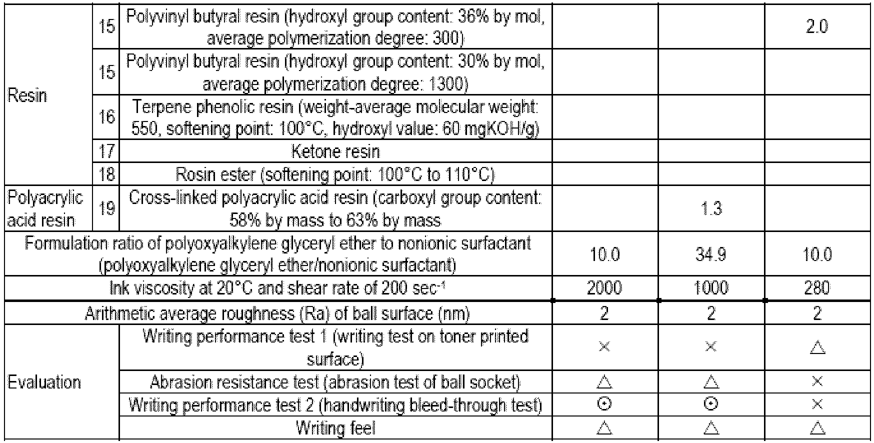

Note that the material numbers 1 to 21 in the tables represent the following.
1 manufactured by Fuji Pigment Co. Ltd.
2 manufactured by Orient Chemical Industries Co. Ltd.
3 SC-P750 manufactured by Sakamoto Yakuhin Kogyo Co. Ltd.
4 SC-P400 manufactured by Sakamoto Yakuhin Kogyo Co. Ltd.
5 SC-P1000 manufactured by Sakamoto Yakuhin Kogyo Co. Ltd.
6 SC-E2000 manufactured by Sakamoto Yakuhin Kogyo Co. Ltd.
7 KJCMPA-100 manufactured by KJ Chemicals Corporation
8 ADK STAB LS-12 manufactured by ADEKA Corporation
9 PLYSURF series manufactured by DKS Co. Ltd.
10 Phosphanol series manufactured by Toho Chemical Industry Co. Ltd.
11 JP Series manufactured by Johoku Chemical Co. Ltd.
12 manufactured by Kao Corporation
13 NYMEEN Series manufactured by NOF CORPORATION
14 PVP K-90 manufactured by ISB Japan Co. Ltd.
15 manufactured by Sekisui Chemical Co. Ltd.
16 manufactured by Yasuhara Chemical Co. Ltd.
17 manufactured by Hitachi Chemical Co. Ltd.
18 manufactured by Arakawa Chemical Industries, Ltd.
19 105-Type manufactured by FUJIFILM Wako Pure Chemical Corporation
20 UNISTER HR170R manufactured by NOF CORPORATION
21 FARMIN series manufactured by Kao Corporation

In Examples 1 to 34, favorable performance was obtained in each of the writing performance test 1 (writing test on a toner printed surface), the abrasion resistance test (abrasion test of ball socket), the writing performance test 2 (handwriting bleed-through test), and the writing feel. As a result of comparing the handwriting in the writing performance test 1 (writing test on a toner printed surface) between Example 1 and Example 3, and Example 7 and Example 8, the handwriting in Example 7 and Example 8 including a diketopyrrolopyrrole-based pigment was very favorable.

In addition, the ballpoint pen oil-based ink composition of Examples in which the pigment was used as the colorant was left to stand for one month, and then microscopically observed, and, as a result, the pigment dispersibility was favorable and stable.

In addition, in a case where a carbon black pigment (X) and a diketopyrrolopyrrole-based pigment (Y) were used in combination, and the pigment dispersibility was compared, the order of favorable pigment dispersibility was the group of Example 27, Example 30, and Example 31 (X/Y = 2.6), Example 33 (X/Y = 0.7), and Example 32 (X/Y = 0.35), and pigment aggregation was slightly observed in Example 33 and Example 32.

In addition, by using the ballpoint pen oil-based ink composition of Example 1, an oil-based ink ballpoint pen was produced and tested in the same manner as in Example 1, except that the displacement amount of the ball in the ballpoint pen tip in the longitudinal direction of the ink storage cylinder was changed to 8 µm and 16 µm, and, as a result, favorable performance was obtained in all of the writing performance test 1 (writing test on a toner printed surface), the abrasion resistance test (abrasion test of ball socket), the writing performance test 2 (handwriting bleed-through test), and the writing feel.

In Comparative Examples 1 and 2, since 12-hydroxystearic acid was not used, the significant line breakage and handwriting blur were observed when the handwriting was performed on the toner printed surface in the writing performance test 1 in which the writing test was performed on the toner printed surface. Moreover, in the abrasion resistance test (abrasion test of ball socket), the abrasion of the ball socket was also poor.

In addition, in Comparative Example 3, there was a lot of bleed-through in the handwriting, and the abrasion of the ball socket was poor in the abrasion resistance test (abrasion test of ball socket). Moreover, when the ballpoint pen oil-based ink composition of Comparative Example 3 using the pigment as the colorant was microscopically observed after one month, pigment sedimentation was observed due to a low ink viscosity, and the writing performance test was poor.

Moreover, in the present examples, the oil-based ink ballpoint pen in which the ballpoint pen refill storing the ballpoint pen oil-based ink composition in the ink storage cylinder is disposed and installed in the axial cylinder has been exemplified, but the writing instrument of the present invention may be a writing instrument as a direct-fill ballpoint pen in which the axial cylinder itself is an ink storage cylinder and the ballpoint pen oil-based ink composition is directly stored in the axial cylinder, or may have a structure that the writing instrument stores the ballpoint pen oil-based ink composition in the ink storage cylinder (ballpoint pen refill) is used as a ballpoint pen as it is.

### INDUSTRIAL APPLICABILITY

The present invention can be used as the ballpoint pen oil-based ink composition, and more specifically, can be widely used as an oil-based ink ballpoint pen filled with the ballpoint pen oil-based ink composition, such as a cap-type oil-based ink ballpoint pen or a knock-type oil-based ink ballpoint pen.

### EXPLANATIONS OF LETTERS OR NUMERALS

100 ballpoint pen
10 ballpoint pen oil-based ink composition
1 ballpoint pen refill
2 ink storage cylinder
3 ball
4 ballpoint pen tip

## Claims

1. A ballpoint pen oil-based ink composition comprising:
a colorant; an organic solvent; and a hydroxy fatty acid,
wherein an ink viscosity of the ballpoint pen oil-based ink composition is 300 mPa·s or more at 20°C and a shear rate of 200 sec⁻¹.

2. The ballpoint pen oil-based ink composition according to claim 1, wherein a content of the hydroxy fatty acid is in a range of 0.1% by mass to 10% by mass both inclusive with respect to a total amount of an ink composition.

3. The ballpoint pen oil-based ink composition according to claim 1, wherein the hydroxy fatty acid is 12-hydroxystearic acid or a derivative of 12-hydroxy fatty acid.

4. The ballpoint pen oil-based ink composition according to claim 3, wherein the derivative of 12-hydroxy fatty acid is a 12-hydroxystearic acid ester.

5. The ballpoint pen oil-based ink composition according to claim 1 or 2, further comprising one or two or more surfactants selected from a phosphate ester-based surfactant, a fatty acid, and a fatty acid ester.

6. The ballpoint pen oil-based ink composition according to claim 5, wherein the phosphate ester-based surfactant includes an alkyl group whose number of carbon atoms is in a range of 8 to 18 both inclusive.

7. The ballpoint pen oil-based ink composition according to claim 6, further comprising an organic amine whose total amine value is 300 mgKOH/g or less.

8. The ballpoint pen oil-based ink composition according to claim 1, further comprising one or two or more resins selected from a polyvinyl butyral resin, a terpene phenolic resin, and a rosin-based resin.

9. The ballpoint pen oil-based ink composition according to claim 1 or 2, wherein the colorant is a pigment.

10. The ballpoint pen oil-based ink composition according to claim 1 or 2, wherein the organic solvent is one or two or more organic solvents selected from an alkylene oxide derivative of glycerin, an alkylene glycol alkyl ether, an amide solvent, and an aromatic alcohol.

11. An oil-based ink ballpoint pen comprising:
a ballpoint pen tip provided at a top end of an ink storage cylinder and configured to rotatably hold a ball,
wherein the ink storage cylinder stores the ballpoint pen oil-based ink composition according to claim 1 or 2.

12. The oil-based ink ballpoint pen according to claim 11, wherein a displacement amount of the ball in an extending direction of the ink storage cylinder is in a range of 3 µm to 25 µm both inclusive.
